# EUROPEAN PATENT SPECIFICATION

(11) **EP 4 618 033 B1**
(45) Date of publication and mention of the grant of the patent: **21.10.2026**
(21) Application number: 25163483.8
(22) Date of filing: 13.03.2025
(51) Int. Cl.: G06V 10/62, G06V 20/69, G06V 10/26

(54) **INFORMATION ACQUISITION METHOD OF ACQUIRING INFORMATION ABOUT CELL VIABILITY, INFORMATION ACQUISITION SYSTEM, INFORMATION ACQUISITION PROGRAM, AND RECORDING MEDIUM**
INFORMATIONSERFASSUNGSVERFAHREN ZUR ERFASSUNG VON INFORMATIONEN ÜBER ZELLLEBENSFÄHIGKEIT, INFORMATIONSERFASSUNGSSYSTEM, INFORMATIONSERFASSUNGSPROGRAMM UND AUFZEICHNUNGSMEDIUM
PROCÉDÉ D'ACQUISITION D'INFORMATIONS CONCERNANT LA VIABILITÉ D'UNE CELLULE, SYSTÈME D'ACQUISITION D'INFORMATIONS, PROGRAMME D'ACQUISITION D'INFORMATIONS ET SUPPORT D'ENREGISTREMENT

(30) Priority: 15.03.2024 JP 2024041731; 17.02.2025 JP 2025023300
(43) Date of publication of application: 17.09.2025
(73) Proprietor: CANON KABUSHIKI KAISHA, Tokyo 146-8501 (JP)
(72) Inventor: YAMAMOTO, Yoji, Tokyo (JP); TOBA, Shuhei, Tokyo (JP); OKANO, Mie, Tokyo (JP)
(74) Representative: WESER & Kollegen Patentanwälte PartmbB

(56) References cited:
- JP-A- 2006 314 214
- US-A1- 2015 050 687
- NYFFELER JOHANNA ET AL: "A structure-activity relationship linking non-planar PCBs to functional deficits of neural crest cells: new roles for connexins", ARCHIVES OF TOXICOLOGY, SPRINGER, DE, vol. 92, no. 3, 21 November 2017 (2017-11-21), pages 1225 - 1247, XP038161545, ISSN: 0340-5761, [retrieved on 20171121], DOI: 10.1007/S00204-017-2125-4
- KIM DONGYOUNG ET AL: "AI-powered transmitted light microscopy for functional analysis of live cells", vol. 9, no. 1, 5 December 2019 (2019-12-05), XP093067192, Retrieved from the Internet <URL:https://www.nature.com/articles/s41598-019-54961-x> [retrieved on 20250625], DOI: 10.1038/s41598-019-54961-x

## Description

### BACKGROUND OF THE INVENTION

### Field of the Invention

The disclosure of the present specification relates to an information acquisition method of acquiring information about cell viability, an information acquisition system, an information acquisition program, and a recording medium.

### Description of the Related Art

In the fields of cell culture and cell manufacturing, discrimination of whether a cell is living or dead and counting the number of live cells are extremely important, and are routinely performed in culture and manufacturing steps and a quality inspection step.

At present, the most widely used method involves photographing an image of a cell sample for evaluation stained with a dead cell staining reagent such as trypan blue, determining unstained cells as live cells and stained cells as dead cells, and counting the numbers of live cells and dead cells.

In Japanese Patent Application Laid-Open No. 2006-314214, there is disclosed a technology for photographing images of cells over time and determining whether a cell is living or dead in each cell region in consideration of the fact that a state of a cell changes every moment and the numbers of live cells and dead cells change over time. There is also disclosed a technology for associating cell regions with each other between the respective images and determining that a cell in the associated cell regions is a dead cell when a proportion of cell regions determined to have a dead cell is equal to or larger than a fixed value.

In addition, in Japanese Patent Application Laid-Open No. 2017-023055, there is disclosed a technology for photographing images of cells over time for two different timings and analyzing and comparing frequencies of a cell death event for the respective timings. Further examples of relevant prior art are NYFFELER JOHANNA ET AL: "A structure-activity relationship linking non-planar PCBs to functional deficits of neural crest cells: new roles for connexins", ARCHIVES OF TOXICOLOGY, SPRINGER, DE, vol. 92, no. 3, 21 November 2017, pages 1225-1247, XP038161545, ISSN: 0340-5761, DOI: 10.1007/ S00204-017-2125-4, and KIM DONGYOUNG ET AL: "AI-powered transmitted light microscopy for functional analysis of live cells",SCIENTIFIC REPORTS, [Online] vol. 9, no. 1, 5 December 2019, XP093067192,DOI: 10.1038/s41598-019-54961-x.

With the related arts, it has been difficult to acquire information about cell viability.

### SUMMARY OF THE INVENTION

In view of the above-mentioned problem, the present invention has an object to provide an information acquisition method of acquiring information about viability of a cell included in a cell stock or the like, an information acquisition system, an information acquisition program, and a recording medium.

According to the present invention, there is provided an information acquisition method of acquiring information about cell viability, the information acquisition method including: an image acquisition step of acquiring a plurality of cell images photographed at a plurality of different photographing timings including a first timing and a second timing; a live cell region determination step of determining whether a cell region present in each of the plurality of cell images is a live cell region including a live cell; a tracking step of tracking live cell regions derived from the same cell region by performing association of live cell regions derived from the same cell region which are respectively present in the plurality of cell images photographed at the plurality of different photographing timings with each other while tracing back in time to the first timing starting from a live cell region present in one of the plurality of cell images photographed at the second timing; and a viability determination step of determining that a live cell region successfully tracked in the tracking step among cell regions present in one of the plurality of cell images photographed at the first timing exhibits viability.

Further, according to the present invention, there is provided an information acquisition program for causing a computer to execute the above-mentioned information acquisition method. Further, according to the present invention, there is provided a recording medium having stored thereon the above-mentioned information acquisition program in a computer-readable format.

Further, according to the present invention, there is provided an information acquisition system for acquiring information about cell viability, the information acquisition system including: an image acquisition module configured to acquire a plurality of cell images photographed at a plurality of different photographing timings including a first timing and a second timing; a live cell region determination module configured to determine whether a cell region present in each of the plurality of cell images is a live cell region including a live cell; a tracking module configured to track live cell regions derived from the same cell region by performing association of live cell regions derived from the same cell region which are respectively present in the plurality of cell images photographed at the plurality of different photographing timings with each other while tracing back in time to the first timing starting from a live cell region present in one of the plurality of cell images photographed at the second timing; and a viability determination module configured to determine that a live cell region successfully tracked by the tracking module among cell regions present in one of the plurality of cell images photographed at the first timing exhibits viability.

Further features of the present invention will become apparent from the following description of exemplary embodiments with reference to the attached drawings.

### BRIEF DESCRIPTION OF THE DRAWINGS

FIG. 1 is a flow chart for illustrating an example of an information acquisition method according to the present invention.
FIG. 2 is a diagram for illustrating a configuration example of an information acquisition system according to the present invention.
FIG. 3 is a diagram for illustrating a hardware configuration example of the information acquisition system according to the present invention.
FIG. 4A is a diagram for illustrating an example of a processing method for a live cell region determination step.
FIG. 4B is a table for showing an example of data output in the live cell region determination step.
FIG. 5 is a flow chart for illustrating an example of a cell region extraction step.
FIG. 6 is a flow chart for illustrating a first example of a processing method for a tracking step.
FIG. 7A is a diagram for illustrating the first example of the processing method for the tracking step.
FIG. 7B is a table for showing a first example of data output in the tracking step.
FIG. 8A is a diagram for illustrating a second example of the processing method for the tracking step.
FIG. 8B is a table for showing a second example of the data output in the tracking step.
FIG. 9A is a diagram for illustrating an example of the live cell region determination step for cell images photographed after a staining process is performed on live cells or dead cells and a reagent that absorbs visible light is added.
FIG. 9B is a table for showing an example of data output in the live cell region determination step.
FIG. 10 is a diagram for illustrating an example of the live cell region determination step for cell images photographed after a staining process is performed on live cells or dead cells and a reagent that emits fluorescence is added.
FIG. 11A is a diagram for illustrating an example of the live cell region determination step using a pre-trained classifier.
FIG. 11B is a table for showing an example of data output in the live cell region determination step.
FIG. 12A, FIG. 12B, FIG. 12C, FIG. 12D, FIG. 12E, and FIG. 12F are diagrams for illustrating a first example of the processing method for the tracking step performed when fusion or separation of cell regions occurs.
FIG. 13A, FIG. 13B, FIG. 13C, FIG. 13D, FIG. 13E, and FIG. 13F are diagrams for illustrating a second example of the processing method for the tracking step performed when fusion or separation of cell regions occurs.
FIG. 14 is a view for illustrating a first example of a UI screen for displaying viability determination results together with image data.
FIG. 15 is a view for illustrating a second example of the UI screen for displaying the viability determination results together with the image data.
FIG. 16 is a view for illustrating a third example of the UI screen for displaying the viability determination results together with the image data.
FIG. 17 is a graph for showing results of comparing a correlation between a viable cell rate and a confluency and a correlation between a live cell rate and a confluency to each other in Example and Reference Example.
FIG. 18 is a graph for showing a correlation between a number of viable cells and a confluency in Example and Reference Example.

### DESCRIPTION OF THE EMBODIMENTS

Embodiments are described in detail below with reference to the attached drawings. The embodiments described below do not limit the present invention set forth in the appended claims. A plurality of features are described in the embodiments, but the present invention does not necessarily require all of those plurality of features, and a plurality of features may be combined as appropriate. In the attached drawings, like components are denoted by the same reference symbols, and redundant description thereof is omitted.

### (Problem to be solved by Information Acquisition Method according to this Embodiment)

The number of live cells is counted as one of items of quality inspection of a cell stock or the like, but information that a person who uses cells wishes to know may be the number of cells capable of continuing to live, namely, viable cells, included in the cell stock or the like, rather than the number of live cells included in the cell stock or the like. However, in live cell counting based on dead cell staining using trypan blue or the like, there has been a problem in that cells that are to die later, namely, non-viable cells, are erroneously determined to be live cells. In addition, in Japanese Patent Application Laid-Open No. 2006-314214, detection accuracy is improved by suppressing misdetection of dead cells due to temporary circularization of cell region images or the like through comprehensive determination based on a plurality of live-or-dead-state determination results acquired over time, while it is difficult to acquire information about cell viability.

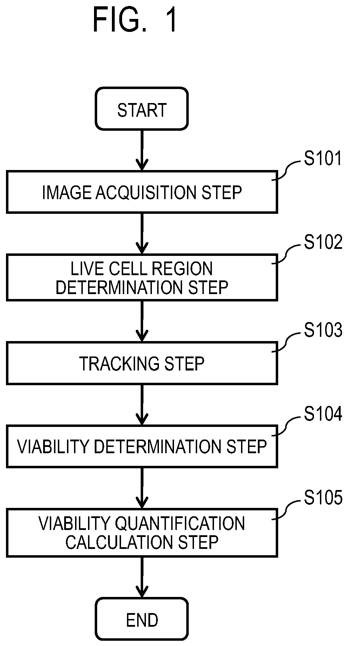

FIG. 1 is a flow chart for illustrating an example of an information acquisition method of acquiring information about cell viability according to this embodiment. The information acquisition method according to this embodiment includes Step S101 being an image acquisition step of acquiring a plurality of cell images photographed at a plurality of different photographing timings including a first timing and a second timing. The information acquisition method also includes Step S102 being a live cell region determination step of determining whether a cell region present in each of the plurality of cell images is a live cell region including a live cell. The information acquisition method also includes Step S103 being a tracking step of tracking live cell regions derived from the same cell region by performing association of live cell regions derived from the same cell region which are respectively present in the plurality of cell images photographed at the plurality of different photographing timings with each other while tracing back in time to the first timing starting from a live cell region present in the cell image photographed at the second timing. The information acquisition method also includes Step S104 being a viability determination step of determining that a live cell region successfully tracked in the tracking step among cell regions present in the cell image photographed at the first timing exhibits viability. The information acquisition method may further include Step S105 being a viability quantification calculation step of calculating at least any one of the number and proportion of live cell regions determined to exhibit viability in the viability determination step out of the cell regions present in the cell image photographed at the first timing.

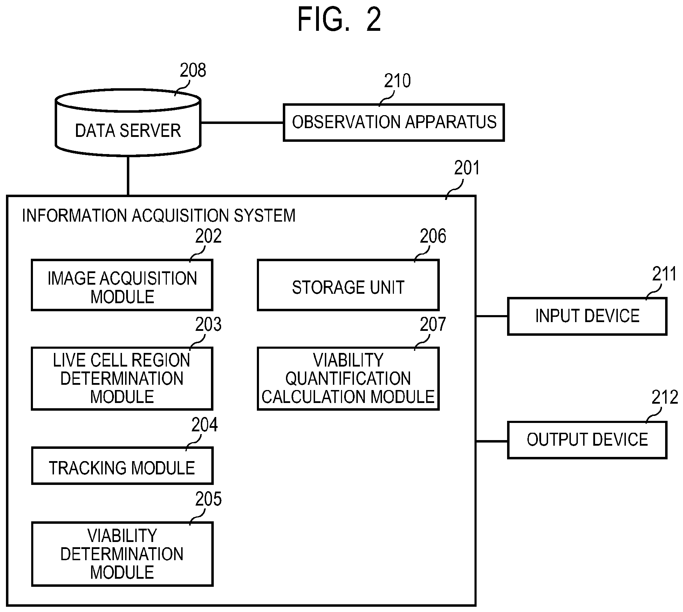

FIG. 2 is a diagram for illustrating a configuration example of an information acquisition system 201 according to this embodiment and other apparatus and devices.

The information acquisition system 201 according to this embodiment includes an image acquisition module 202 that acquires a plurality of cell images photographed at a plurality of different photographing timings including a first timing and a second timing. The information acquisition system 201 also includes a live cell region determination module 203 that determines whether or not a cell region present in each of the plurality of cell images is a live cell region including a live cell. The information acquisition system 201 also includes a tracking module 204 that tracks live cell regions derived from the same cell region by performing association of live cell regions derived from the same cell region which are respectively present in the plurality of cell images photographed at the plurality of different photographing timings with each other while tracing back in time to the first timing starting from a live cell region present in the cell image photographed at the second timing. The information acquisition system 201 also includes a viability determination module 205 that determines that a live cell region successfully tracked by the tracking module 204 among cell regions present in the cell image photographed at the first timing exhibits viability. The information acquisition system 201 may also include a storage unit 206 and a viability quantification calculation module 207, which are described later. The image acquisition module 202, the live cell region determination module 203, the tracking module 204, the viability determination module 205, and the viability quantification calculation module 207 can carry out the steps of from Step S101 to Step S105, respectively, described in the following embodiments and modification examples. The storage unit 206 stores intermediate and final output information obtained in each step, a control program and an analysis program for executing the processing of each step, and a predetermined rule and a trained classifier for determining whether or not each region is a live cell region. The storage unit 206 is not necessarily required to be provided within the information acquisition system 201, and may be externally provided as a storage device, or may be externally provided as an input and output device capable of reading and writing data from and to a recording medium.

The information acquisition system 201 is externally connected to a data server 208, an input device 211, and an output device 212. In addition, an observation apparatus 210 is connected to the data server 208.

The observation apparatus 210 is an apparatus that photographs a cell image such as a phase contrast image, a dark-field image, a differential interference contrast image, a transmitted light image, or a fluorescent image. In order to carry out photographing over time during culture, an automated cell culture observation system in which a cell culture incubator and the observation apparatus 210 are integrated and a photographing schedule is programmable may be used. The observation apparatus 210 is connected to the data server 208, and outputs image data to the data server 208 in order to store the photographed cell image.

The data server 208 holds cell image data photographed over time (the plurality of cell images photographed at the plurality of different photographing timings including the first timing and the second timing) by the observation apparatus 210. The data server 208 is, for example, a recording medium such as a hard disk drive (HDD) or a solid-state drive (SSD) which is connected to the observation apparatus 210 and the information acquisition system 201 through a network.

The input device 211 is a device for inputting information to the information acquisition system 201, and is typically a user interface for a user to operate the information acquisition system 201. Examples of the input device 211 include a keyboard, a button, a mouse, and a touch panel.

The output device 212 is a device that outputs information from the information acquisition system 201 to the outside, and is typically a user interface for presenting information to the user. Examples of the output device 212 include a display, a printer, and a speaker. The input device 211 and the output device 212 may be integrally formed as a touch panel.

The configuration of the information acquisition system 201 according to this embodiment is not limited to only the above-mentioned configuration, and for example, the information acquisition system 201 may include therein some or all of the observation apparatus 210, the data server 208, the input device 211, and the output device 212.

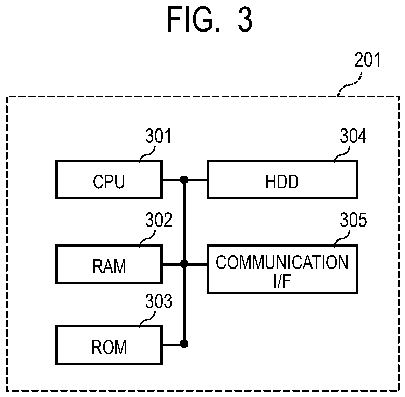

FIG. 3 is a block diagram for illustrating an example of a hardware configuration of the information acquisition system 201 according to this embodiment. The information acquisition system 201 includes a CPU 301, a RAM 302, a ROM 303, an HDD 304, and a communication I/F 305. Those components are connected to each other through a bus or the like.

The CPU 301 is a processor that reads out programs stored in the ROM 303 and the HDD 304 onto the RAM 302 and executes the programs to, for example, perform arithmetic operation processing and control each of the components of the information acquisition system 201. The processing to be performed by the CPU 301 may include extraction of a cell region, determination of whether or not each region is a live cell region, determination of the viability, and calculation of quantitative information about the viability.

The RAM 302 is a volatile storage medium and functions as a work memory when the CPU 301 executes a program. The ROM 303 is a non-volatile storage medium, and stores firmware or the like required for operating the information acquisition system 201. The HDD 304 is a non-volatile storage medium, and stores programs used for the processing such as the extraction of a cell region, the determination of whether or not each region is a live cell region, the determination of the viability, and the calculation of quantitative information about the viability in this embodiment, as well as image data and the like.

The communication I/F 305 is a communication device based on a standard such as Wi-Fi (trademark), Ethernet (trademark), or Bluetooth (trademark). The communication I/F 305 is used for communication to and from, for example, the observation apparatus 210 or another computer.

The hardware configuration of the information acquisition system 201 described above is merely an example, and can be changed as appropriate. Devices other than those described above may be added, or some of the devices may be omitted. Some of the devices may also be replaced by other devices having the same functions. Further, some of the functions may be provided by other devices through the network, or the functions for implementing this embodiment may be shared and implemented by a plurality of devices.

Further, for example, examples of processors that may be installed on the information acquisition system 201 include a GPU, an ASIC, and an FPGA in addition to the above-mentioned CPU 301. In addition, a plurality of those processors may be arranged, and the plurality of processors may perform processing in a distributed manner. In addition, a function of storing information such as image data in the HDD 304 may be arranged in the data server, not in the information acquisition system 201. In addition, the HDD 304 may be a storage medium such as an optical disc, a magneto-optical disk, or an SSD.

### <First Embodiment>

### (Overview)

In a first embodiment, a method of acquiring information about cell viability based on tracking information on respective cell regions in cell images photographed over time and live cell region determination results through use of an information acquisition method according to this embodiment and an information acquisition system according to this embodiment is described.

### (Step S101: Image Acquisition Step)

In this embodiment, Step S101 is an image acquisition step of acquiring, by the image acquisition module 202, a plurality of cell images photographed at a plurality of different photographing timings including a first timing and a second timing later than the first timing. The photographing timings may further include one or a plurality of timings between the first timing and the second timing. That is, Step S101 is an image acquisition step of acquiring a plurality of cell images photographed over time. In the present step, the image acquisition module 202 can acquire cell images photographed by the observation apparatus 210 and stored in the data server 208 when receiving a processing request from the user. The image acquisition module 202 is connected to the data server 208 through the network or the like, and can acquire a plurality of cell images stored in the data server 208.

The cell images acquired in the present step are each an image obtained by photographing cells targeted for acquisition of information about viability (whether or not there is viability), and may be any image that can be subjected to identification of a cell region including a cell and determination of whether or not the cell region includes a live cell. As a mode of the targeted cells, any one of a single cell state in which individual cells are separated from each other and an aggregated state such as a colony in which a plurality of cells are gathered may be employed. Which state is predominant depends on a cell type and a culture method. The "cell region" as used herein may refer to any one of a region formed of one cell and a region formed of a plurality of cells, and includes both a cell region determined to be a live cell region including a live cell in a live cell region determination step described later and a cell region (dead cell region) that is not determined to be a live cell region.

Examples of the cell image suitable for unstained cells include the phase contrast image, a dark-field image, and a differential interference contrast image. Examples of the cell image suitable for stained cells include a transmitted light image and a fluorescent image. For the photographing over time during culture, it is suitable to use an automated cell culture observation system in which a cell culture incubator and an observation apparatus are integrated and a photographing schedule is programmable, but it is also possible to manually perform the photographing and cell sample movement.

The cell images to be acquired are images obtained through the photographing over time at different photographing timings from the first timing of photographing a cell image including a cell region targeted for determination of the viability to the second timing later than the first timing. For example, in a case of determining the viability as inspection of a cell stock, it is suitable to set the first timing to a time point at which the cell stock is opened to start culture and set the second timing to a time point at which the culture is stabilized and dead cells are unlikely to occur.

It is required to associate cell regions (live cell regions) with each other between the cell images photographed over time in a later step, and hence it is desired to measure a migration or movement speed of each cell in advance and set a photographing interval to an interval short enough to enable the association. The number of photographing times can be determined from an interval between the first timing and the second timing and an interval between timings of the photographing performed between the first timing and the second timing.

In regard to the acquisition of the images photographed over time, for example, each of the images may be acquired in real time from the observation apparatus 210 and/or the data server 208 for each time of the photographing, or the images that have been stored in an external storage area such as an HDD or a cloud storage may collectively be acquired at a later time.

Each cell image may be stored in advance in the storage unit 206 included in the information acquisition system 201, and the image acquisition module 202 may acquire each cell image that has been stored in advance from the storage unit 206.

Through the present step, the image acquisition module 202 acquires the cell image data photographed at the plurality of different photographing timings from the first timing to the second timing. At this time, the image acquisition module 202 is preferred to assign a timing ID indicating the photographing timing to each cell image. For example, the image acquisition module 202 acquires each display image serving as each cell image and image information about the display image from the observation apparatus 210 and/or the data server 208, and assigns the timing ID to the cell image based on information such as a photographing time of the cell image which is included in the image information. More specifically, t₁ to t_{N} (where N represents the number of photographing times, the N being 2 or more) arranged in order of an elapsed time or the photographing time of the cell image are used as timing IDs. In this case, the timing ID for the first timing is t₁, and the timing ID for the second timing is t_{N}.

Each cell image and timing ID acquired by the image acquisition module 202 may be transmitted to the live cell region determination module 203 that performs the subsequent step, or may be appropriately stored in the storage unit 206 and acquired by the live cell region determination module 203.

### (Step S102: Live Cell Region Determination Step)

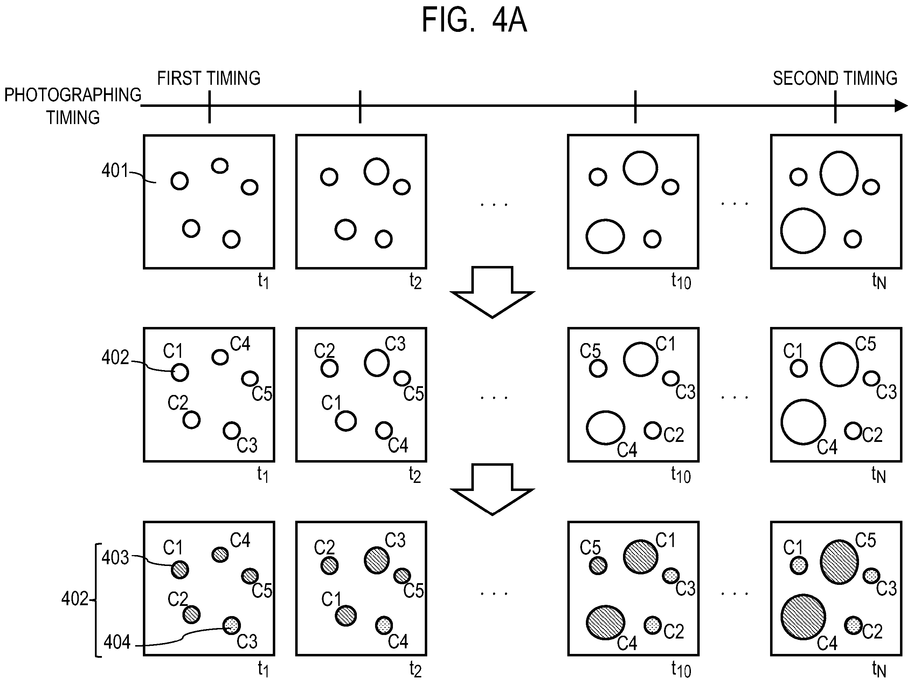

In this embodiment, Step S102 is a live cell region determination step of extracting, by the live cell region determination module 203, cell regions from each of the cell images acquired by the image acquisition module 202 in Step S101, and determining whether or not each individual cell region is a live cell region including a live cell. FIG. 4A is a diagram for schematically illustrating the live cell region determination step.

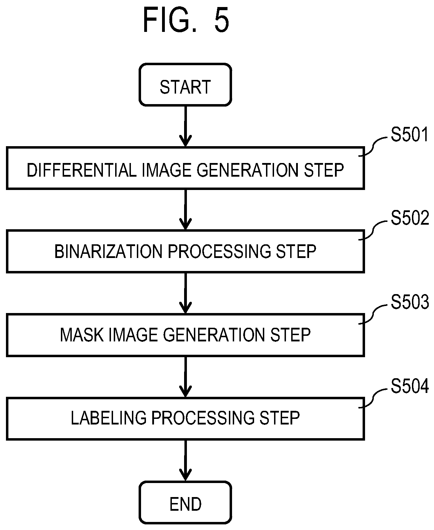

First, cell regions 402 are extracted from a plurality of cell images 401 photographed at the plurality of different photographing timings and assigned respective timing IDs (t₁ to t_{N}). For the extraction of the cell regions 402, image processing or a publicly known image analysis technology based on machine learning can be used. In this embodiment, the cell regions 402 are extracted by a differential filter and through binarization processing. In the following description, a cell region extraction step of extracting the cell regions 402 is described with reference to FIG. 5.

Step S501 is a differential image generation step of generating a differential image by applying a differential filter to each cell image. The differential image is obtained by calculating, for each pixel, an amount of change in luminance value between the pixel and surrounding pixels, and expressing calculated amounts of change as an image. For the cell image, the differential image is an image that has high luminance values in contour portions of cell regions and contour portions of cells within the cell regions.

Step S502 is a binarization processing step of performing binarization processing on the differential image generated in Step S501, to thereby extract regions having high luminance values in the differential image. In the binarization processing, any threshold value is set, and a value of each pixel of the differential image is replaced by 1 when the value is equal to or larger than the threshold value, and is replaced by 0 when the value is smaller than the threshold value.

How the binarization processing is executed is not limited to the method in which any threshold value is set. For example, a method of automatically determining a threshold value such as Otsu's binarization or binarization by Li's algorithm may be used. In a case of setting any threshold value, the threshold value is set so as to suit photographing conditions of the apparatus such as an exposure time and focus setting. A method of determining a threshold value for each pixel of an image such as adaptive binarization may also be used. Through the binarization processing, a binary image expressed by setting pixel values in a region exhibiting a large change in luminance value to 1 and pixel values in other regions to 0 (hereinafter referred to as "edge image") is created.

Step S503 is a mask image generation step of generating a mask image of cell regions based on the edge image generated in Step S502. Here, the mask image is a binary image in which cell regions are expressed by a pixel value of 1 and other regions are expressed by a pixel value of 0. The mask image is generated by extracting regions in each of which pixels having a value of 1 are linked to each other in the edge image, and replacing the pixel values inside each linked region by 1.

Step S504 is a labeling processing step of acquiring region coordinate information from the mask image generated in Step S503, and performing labeling processing on the mask image, to thereby generate a label image in which a region ID for identifying each individual cell region is assigned to the cell region. In the labeling processing step, regions in each of which pixels having a value of 1 are linked to each other in the mask image are extracted, and, for each linked region, an operation of replacing values of pixels in that region by a pixel value that differs for each linked region is performed.

The processing steps of from Step S501 to Step S504 are carried out on the cell image of each timing ID acquired in Step S101, to thereby extract the cell regions 402 in each cell image 401. In addition, as illustrated in FIG. 4A, the live cell region determination module 203 assigns region IDs (C1 to C5) to the respective cell regions 402 present in each cell image 401.

In this case, for example, when cells to be subjected to the determination of whether or not each region is a live cell region form an aggregate in which a plurality of cells are gathered, such as a colony, each individual cell may be extracted as a separate cell region 402, or the entire aggregate may be extracted as one cell region 402. Any one of extraction methods can be selected depending on the purpose by optimizing the method, threshold value setting, and the like in the above-mentioned cell region extraction step.

Subsequently, it is determined whether or not the extracted cell region 402 is a live cell region including a live cell. For example, the determination is performed in accordance with a rule set in advance based on the image features of each cell region. When the cell region 402 is formed of a plurality of cells, it is not required that all the cells be live cells, and the cell region 402 including at least one live cell is determined to be a live cell region. The determination of whether or not the cell region 402 is a live cell region is performed for all cell regions extracted from the cell image of each timing ID. Thus, as illustrated in FIG. 4A, the cell regions 402 are divided into live cell regions 403 and cell regions 404 that have not been determined to be a live cell region.

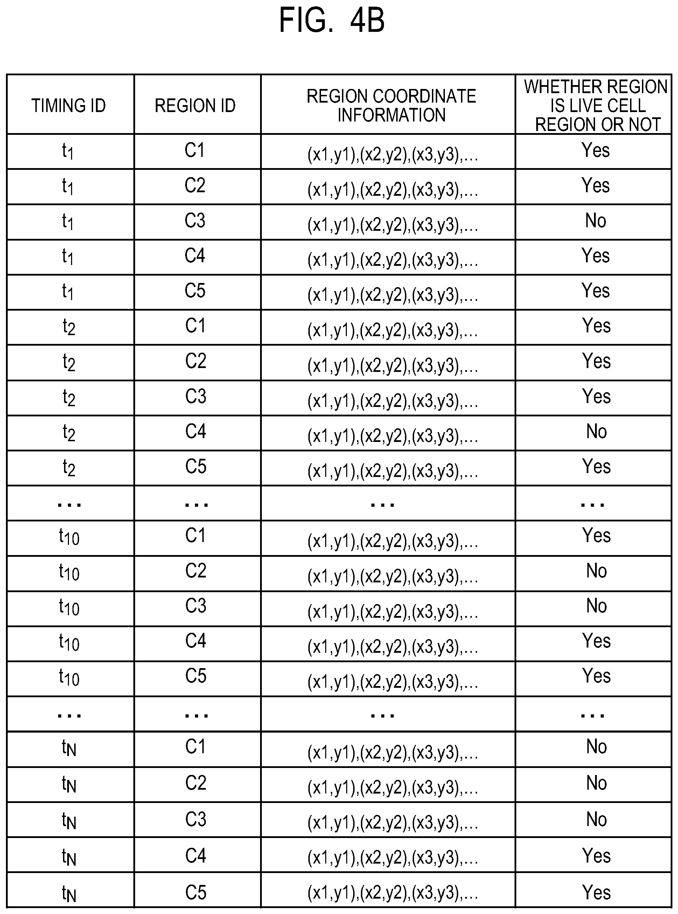

Finally, as shown in FIG. 4B, for each individual cell region included in each cell image, the timing ID for identifying the photographing timing, the region ID for identifying the cell region, the region coordinate information, and information indicating whether or not the region is a live cell region are output, for example, in a table format.

The above-mentioned timing ID, region ID, region coordinate information, and information indicating whether or not the region is a live cell region may be transmitted from the live cell region determination module 203 to the tracking module 204 that performs the subsequent step, or may be appropriately stored in the storage unit 206 and acquired by the tracking module 204.

### (Step S103: Tracking Step)

In this embodiment, Step S103 is a tracking step of tracking, by the tracking module 204, live cell regions derived from the same cell region by performing the association of live cell regions derived from the same cell region which are respectively present in the plurality of cell images photographed at the plurality of different photographing timings with each other while tracing back in time in order to the first timing starting from a live cell region present in the cell image photographed at the second timing.

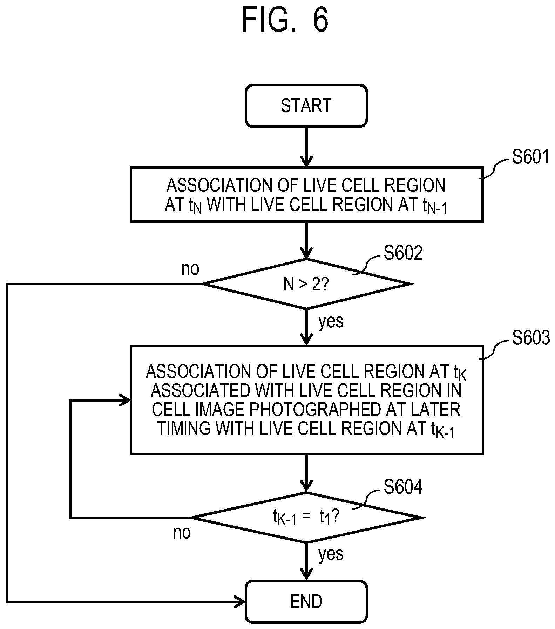

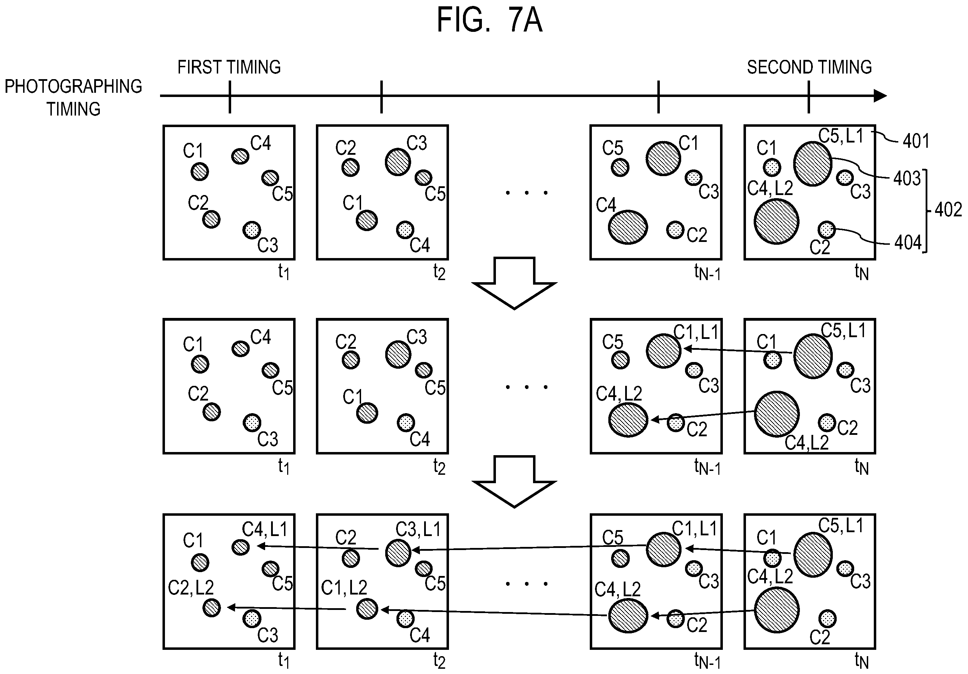

In FIG. 6 and FIG. 7A, an example of the above-mentioned flow is illustrated.

First, in Step S601 illustrated in FIG. 6, region IDs and pieces of region coordinate information are obtained for the live cell regions 403 among the cell regions 402 included in the cell images 401 photographed at photographing timings t_{N} (second timing) and t_{N-1} (immediately before the second timing). Here, unique live cell tracking IDs (L1 and L2) are newly assigned to the respective live cell regions 403 in the cell image 401 at t_{N}. The live cell tracking ID to be used may be the same as the region ID of each live cell region 403 in the cell image 401 at t_{N}.

Then, the association of live cell regions derived from the same cell region with each other is performed for the live cell regions 403 present in the cell images 401 photographed at the photographing timings t_{N} and t_{N-1}. Examples of a method for the association include a method of discriminating whether or not the live cell regions in the two cell images are derived from the same cell region based on an overlapping amount between the live cell regions. For example, the region ID of the live cell region in the cell image at t_{N} is represented as A1, the region ID of the live cell region at t_{N-1} is represented as A2, the areas of A1and A2 are represented as S(A1) and S(A2), respectively, and the area of an overlap between the two live cell regions is represented as S(A1∩A2). The overlapping amount (Overlap) is calculated by Expression (1) given below, and the live cell regions having the overlapping amount larger than 0 and maximum can be associated with each other by being determined to be derived from the same cell region. A lower limit of the overlapping amount can be set to any numerical value depending on the cell type or the like. $Overlap = S \left(A1∩A2\right) / min \left(S\left(A1\right),S\left(A2\right)\right)$ (1)

In this embodiment, first, in Step S601, the association of live cell regions derived from the same cell region with each other is performed while tracing back to the cell image at t_{N-1} starting from the live cell region present in the cell image at the second timing t_{N}. For the region ID of each specific live cell region to be subjected to the association in the cell image at t_{N}, a search is performed for a live cell region at t_{N-1} to be determined to be derived from the same cell region as the specific live cell region at t_{N} while sequentially changing the region ID of the live cell region in the cell image at t_{N-1}. The tracking module 204 assigns the same live cell tracking ID to the live cell region in the cell image at t_{N-1} and the live cell region in the cell image at t_{N} that have been determined to be derived from the same cell region. Thus, the association of the respective specific live cell regions between the cell images at t_{N} and t_{N-1} is completed. Further, it is possible to associate all the live cell regions in the cell image at t_{N} with the live cell regions at t_{N-1} while tracing back by sequentially repeating the above-mentioned operation for all the live cell regions in the cell image at t_{N}.

The above-mentioned determination method is merely an example, and other means, for example, a method of calculating a distance between centroids or a method of calculating an optical flow such as a Lucas-Kanade method, may be used to discriminate live cell regions derived from the same cell region. In another case, the tracking may be performed by generating three-dimensional volume data in which mask images of cell regions created at respective photographing timings are superimposed in chronological order and detecting linked regions in the three-dimensional volume data. The detection of linked regions can be achieved by applying the labeling processing performed in Step S504 to the three-dimensional volume data. Through the labeling processing for the three-dimensional volume data, the same value is assigned to regions connected in width, height, and time directions of the photographed cell images. It is possible to associate the live cell regions with each other by assigning this value as the live cell tracking ID for the cell regions at the respective photographing timings.

Step S602 to Step S604 indicate a flow in which this association operation is repeated while tracing back in time in order to the first timing. When N in t_{N} is 2 in Step S602, the tracking step is ended. When N is larger than 2, Step S603 described below is performed. In Step S603, a live cell region which is present in a cell image having a timing ID of tₖ (where "k" is 2 to N-1) and which has already been associated with a live cell region in a cell image photographed at a later timing tₖ₊₁ is associated with a live cell region in a cell image having a timing ID of tₖ₋₁. This is repeated until tₖ₋₁=t₁ in Step S604. That is, processing in which a live cell region successfully associated in the most recent processing with a live cell region in a cell image photographed at a later timing is associated with a live cell region included in a cell image photographed at the previous photographing timing is repeated. Thus, as illustrated in FIG. 7A, it is possible to track the live cell regions 403 derived from the same cell region in association with each other while tracing back in time in order to the first timing. The associated live cell regions 403 are assigned the same live cell tracking ID (L1 or L2).

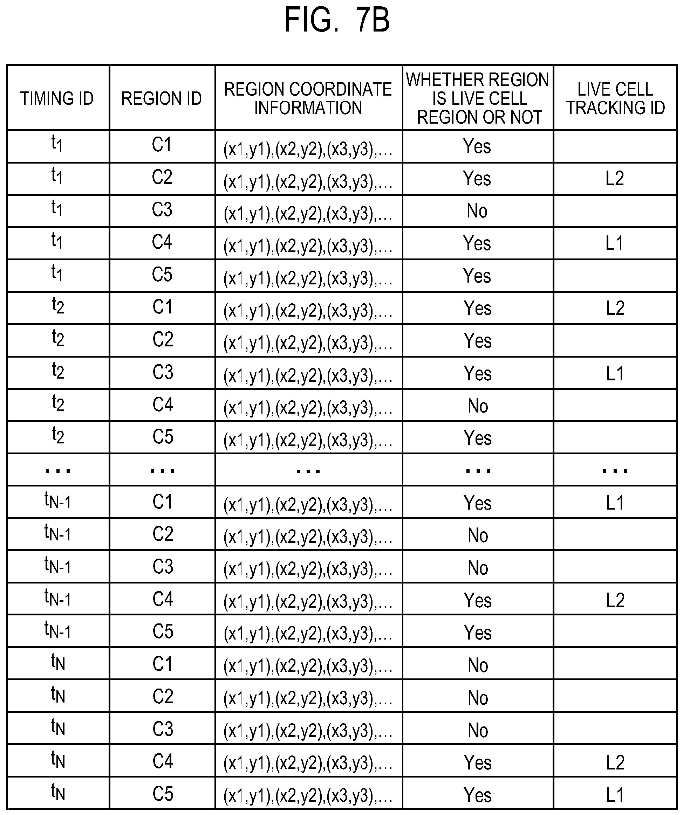

Finally, as a result of performing the above-mentioned association and tracking, as shown in FIG. 7B, the timing ID, the region ID, the region coordinate information, the information indicating whether or not the region is a live cell region, and the live cell tracking ID for each cell region are output as association information on the live cell region. The association information on the live cell region including the timing ID, the region ID, the region coordinate information, the information indicating whether or not the region is a live cell region, and the live cell tracking ID described above may be transmitted from the tracking module 204 to the viability determination module 205, or may be appropriately stored in the storage unit 206 and acquired by the viability determination module 205.

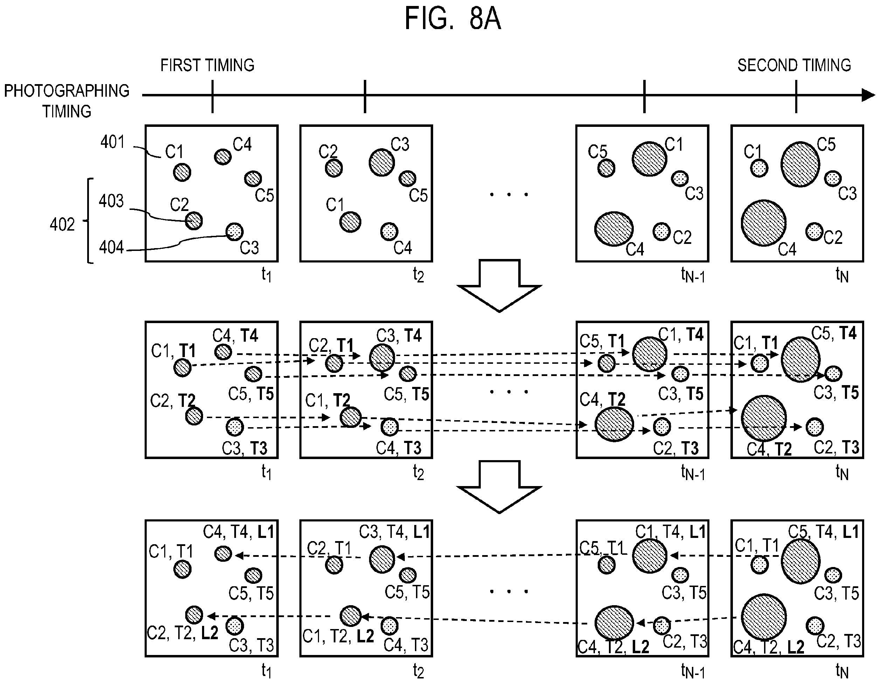

The method of carrying out the association of only live cell regions while tracing back in time from the second timing to the first timing has been described above. As another association method, a method illustrated in FIG. 8A is also suitable.

First, for all the cell regions 402 included in each cell image 401, association of cell regions derived from the same cell region with each other is carried out between cell images at two consecutive photographing timings. That is, cell regions derived from the same cell region which are present in a plurality of cell images photographed at a plurality of different photographing timings are associated with each other. Then, cell tracking IDs (T1 to T5) are assigned so that the cell regions derived from the same cell region have the same ID. The method of associating the cell regions derived from the same cell region which are present in a plurality of cell images with each other may be performed by replacing the "live cell region" in the overlapping amount calculation using Expression (1) given above by the "cell region." In another case, when the tracking is performed by generating three-dimensional volume data in which mask images of cell regions created at respective photographing timings are superimposed in chronological order and detecting linked regions therein, this may be performed for all the cell regions to assign the cell tracking IDs thereto.

Further, the same live cell tracking ID (L1 or L2) is assigned to live cell regions in different cell images that have the same cell tracking ID as that of each live cell region in the cell image at t_{N} photographed at the second timing while tracing back in time in order. Thus, the live cell regions are associated with each other.

To describe the association of the live cell regions with each other in detail, the same live cell tracking ID is first assigned to the live cell regions 403 which are derived from the same cell region and which have the same cell tracking ID in the cell images 401 having the timing IDs of t_{N} and t_{N-1}. Thus, the live cell regions derived from the same cell region are associated with each other in Step S601 of FIG. 6. When N in t_{N} is 2 in Step S602, the tracking step is ended. When N is larger than 2, Step S603 is performed. In Step S603, in the same manner as described above, a live cell region which is present in the cell image having the timing ID of tₖ and which has already been associated with a live cell region in the cell image photographed at the later timing tₖ₊₁ is associated with a live cell region present in the cell image having the timing ID of tₖ₋₁. This is repeated until tₖ₋₁=t₁ in Step S604.

That is, after the association of cell regions derived from the same cell region which are present in the plurality of cell images with each other is performed, the association of live cell regions derived from the same cell region which are present in the plurality of cell images is performed while tracing back in time to the first timing starting from a live cell region present in the cell image photographed at the second timing. In this embodiment, the case in which the association of cell regions derived from the same cell region with each other is carried out for all the cell regions from the first timing t₁ in chronological order of t₂ → t₃ → ... has been described, but the order of the association of the cell regions is not limited thereto.

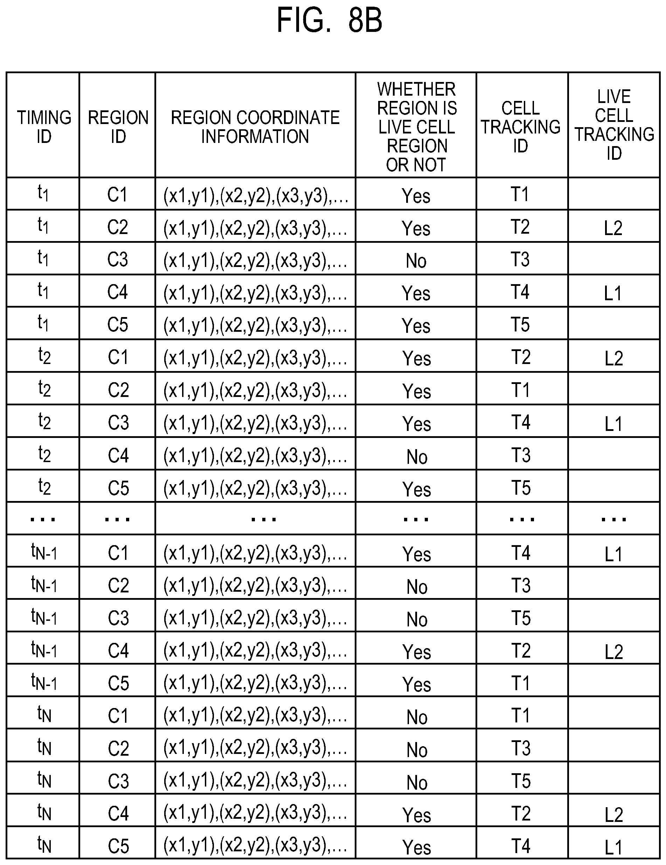

In this case, as shown in FIG. 8B, the timing ID, the region ID, the region coordinate information, the information indicating whether or not the region is a live cell region, the cell tracking ID, and the live cell tracking ID for each cell region are output as association information on the live cell region. The timing ID, the region ID, the region coordinate information, the information indicating whether or not the region is a live cell region, the cell tracking ID, and the live cell tracking ID described above may be transmitted from the tracking module 204 to the viability determination module 205, or may be appropriately stored in the storage unit 206 and acquired by the viability determination module 205.

### (Step S104: Viability Determination Step)

Step S104 is a viability determination step of determining, by the viability determination module 205, that a live cell region successfully tracked in the tracking step among cell regions present in the cell image photographed at the first timing exhibits viability.

Processing in this step is performed as follows.

Whether or not a live cell tracking ID has been assigned to each cell region present in the cell image having the timing ID (t₁) corresponding to the first timing is determined based on the association information on the live cell region output by the tracking module 204 in Step S103. A live cell region to which a live cell tracking ID has been assigned is determined to "exhibit viability," and a cell region to which no live cell tracking ID has been assigned (live cell region or cell region that has not been determined to be a live cell region) is determined to "exhibit no viability."

The information about the cell viability obtained in the above-mentioned manner is output by being added to the association information on the live cell region output by the tracking module 204 in Step S103. The viability determination module 205 can output the association information on the live cell region and the information about the cell viability that have been described above to the output device 212 through the network or the like, and can present the determination results to the user. Further, the above-mentioned information about the cell viability (and association information on the live cell region) may be transmitted from the viability determination module 205 to a module that performs the subsequent step (for example, viability quantification calculation module 207 in Modification Example 1), or may be appropriately stored in the storage unit 206 and acquired by a module that performs the subsequent step.

### (Modification Example 1 (Step S105): Viability Quantification Calculation Step)

In quality inspection of a cell stock or the like, it is important to acquire quantitative information about the cell viability. Thus, the information acquisition system 201 is preferred to include the viability quantification calculation module 207, and the information acquisition method is preferred to include Step S105, which is a viability quantification calculation step. In the present step, the viability quantification calculation module 207 acquires the information about the cell viability obtained in Step S104 (and association information on the live cell region obtained in Step S103). Then, at least any one of the number and proportion of live cell regions determined to exhibit viability out of the number of cell regions present in the cell image photographed at the first timing is calculated, and the quantitative information about the cell viability is calculated. The above-mentioned proportion can be set to the proportion of the number of live cell regions determined to exhibit viability out of the number of cell regions present in the cell image photographed at the first timing or to the proportion of the number of live cell regions determined to exhibit viability out of the number of live cell regions present in the cell image photographed at the first timing.

In this modification example, the above-mentioned viability quantification calculation step is performed by the viability quantification calculation module 207, but may be performed by the viability determination module 205 or by a module that performs another step.

The viability quantification calculation module 207 can output the association information on the live cell region, the information about the cell viability, and the above-mentioned number and/or proportion of live cell regions determined to exhibit viability to the output device 212 through the network or the like, and can present the results to the user.

### (Modification Example 2: Live Cell Region Determination based on Staining)

It is also suitable to acquire, in Step S101, which is the image acquisition step, a cell image by photographing cells subjected to a staining process involving adding a reagent that stains at least any one of live cells and dead cells, and in Step S102, which is the live cell region determination step, determine whether or not the region is a live cell region based on the difference in degree of staining. Examples of reagents that preferentially stain live cells include calcein AM, a fluorescent esterase reagent including a fluorescein diacetate derivative, and others such as a thiol-reactive fluorescent reagent. Examples of reagents that preferentially stain dead cells include trypan blue, a propidium iodide, 7-amino-actinomycin D, and an ethidium homodimer. It is also suitable to use a combination of a plurality of reagents that each stain at least any one of live cells and dead cells, and examples thereof include a Hoechst-based nuclear staining reagent such as Hoechst 33342 and various organelle staining reagents. Those can be easily selected by a person skilled in the art.

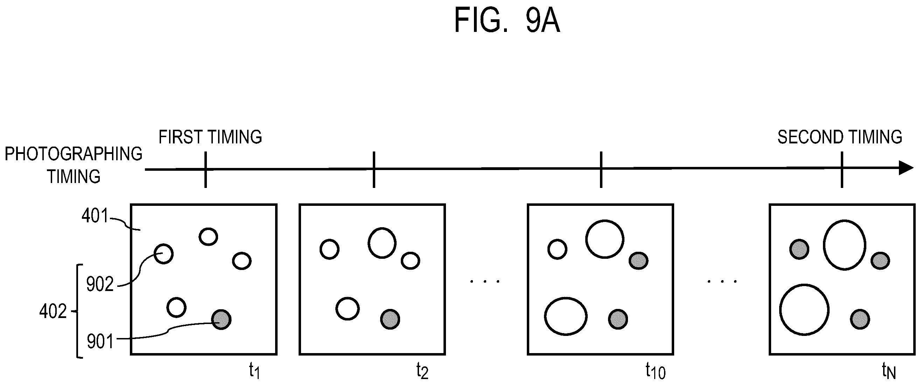

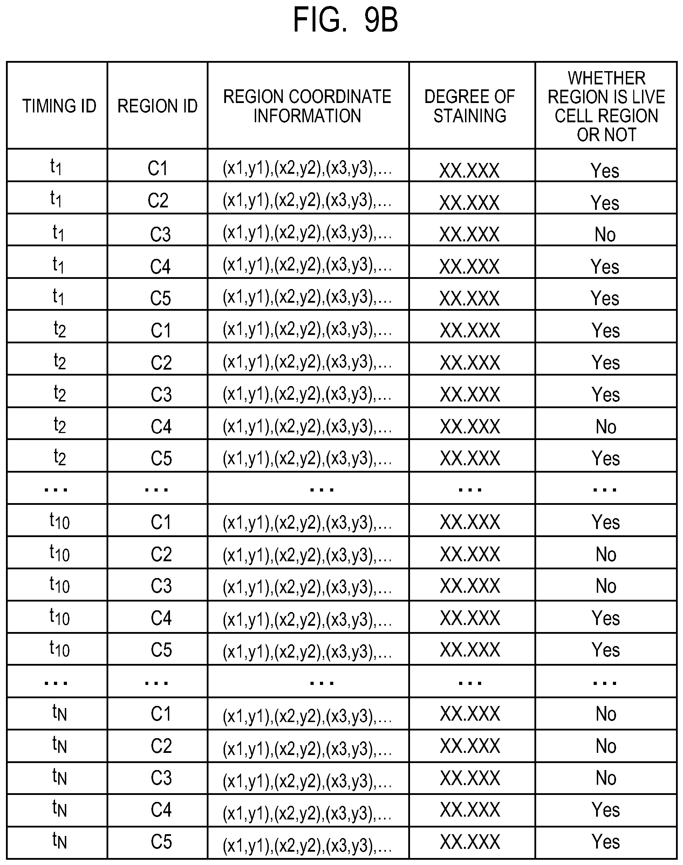

For example, as illustrated in FIG. 9A, the cell image 401 obtained by staining live cells or dead cells before the first timing, adding a reagent that absorbs visible light, and photographing the cells in a transmitted light image is acquired in Step S101. In this case, a stained cell region 901 and an insufficiently stained cell region 902 appear on the cell image 401. In the live cell region determination step of Step S102, the degree of staining is calculated for each of extracted cell regions 402. For example, as the degree of staining, an average luminance or a minimum luminance of the cell region is calculated for a monochrome cell image, or color information is calculated for a color cell image. When the cell region includes a plurality of cells, a proportion of stained portions in the cell region may be calculated together. It is possible to determine whether or not each cell region is a live cell region by comparing the degree of staining to a threshold value set in advance or the like to regard a cell region having the degree of staining equal to or larger than the threshold as the stained cell region 901 and a cell region having the degree of staining smaller than the threshold as the insufficiently stained cell region 902. Then, such information including the degree of staining and information indicating whether or not each cell region is a live cell region as shown in FIG. 9B is output.

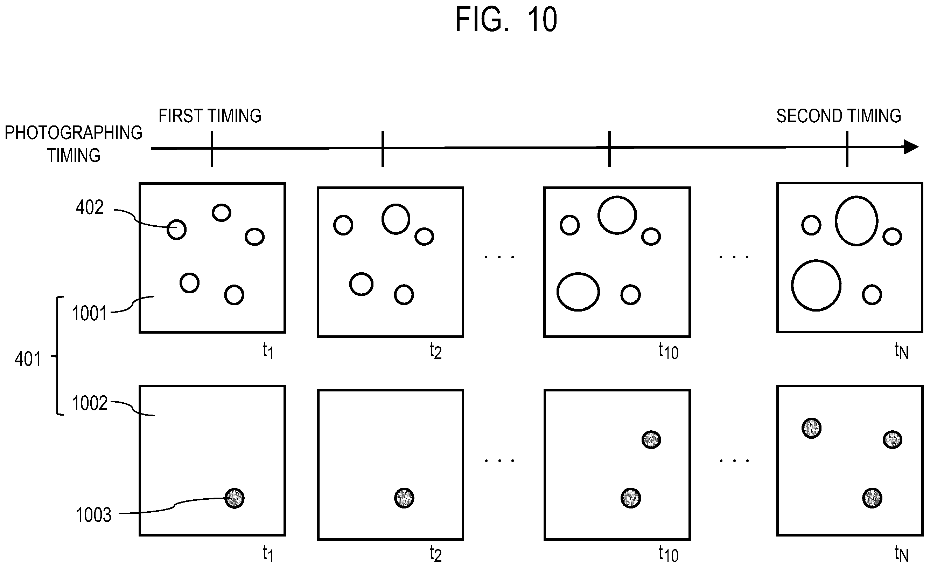

In another example, as illustrated in FIG. 10, the cell images 401 obtained by staining live cells or dead cells before the first timing, adding a reagent that emits fluorescence, and photographing the cells is acquired in Step S101. In this case, as the cell images 401, a fluorescent cell image 1002 is acquired in addition to a cell morphology image 1001 in which a form of each cell has been captured such as a phase contrast image, a dark-field image, a differential interference contrast image, or a transmitted light image. The fluorescent cell image 1002 enables identification of a stained cell region 1003. A cell image in which the form has been captured is often suitable for extracting the cell regions 402. Thus, each cell region 402 is extracted from the cell morphology image 1001 in which the form has been captured, the region coordinate information is obtained, and then the degree of staining of the corresponding (same) cell region in the fluorescent cell image 1002 is calculated. When the cell region includes a plurality of cells, a proportion of portions having the degree of staining equal to or larger than a fixed degree in the cell region may be calculated together. Further, the degree of staining is compared to a threshold value set in advance or the like to determine whether or not each cell region is a live cell region, and such information including information indicating whether or not each cell region is a live cell region as shown in FIG. 9B is output. There is a case in which a misalignment has occurred between the cell morphology image 1001 in which the form of each cell has been captured and the fluorescent cell image 1002, and hence alignment is carried out in advance as the requirement arises.

The description of this modification example has been directed to the examples of each using one type of staining reagent. A method of, for example, combining two types of reagents that stain live cells and dead cells in different wavelengths or combining reagents that stain cells is also effective. This method improves accuracy of determining whether or not each cell region is a live cell, and thus is suitable. A plurality of cell images may be photographed while changing a filter or a wavelength band of an excitation light source for one photographing timing. A person skilled in the art can easily perform selection from those methods.

### (Modification Example 3: Live Cell Region Determination using Pre-trained Classifier)

In order to acquire information about cell viability through use of cell images photographed over time, it is preferred to prevent cells from being damaged by toxicity of the staining reagent or the like during the photographing of the cell images. In this modification example, the live cell region determination module 203 includes a classifier, and in Step S102, which is the live cell region determination step, determines whether or not each cell region is a live cell region as follows. The determination is performed through use of a classifier that has been trained so as to use, as input, at least any one of at least a part of the cell image including a targeted cell region (to be determined as to whether or not the cell region is a live cell region) and an image feature amount calculated from at least a part of the cell image including the targeted cell region and to use, as output, a result of determining whether or not the targeted cell region is a live cell region. Thus, in the image acquisition step, it is possible to acquire cell images photographed without staining cells, and acquire the information about the cell viability without damage due to the toxicity of the staining reagent or the like.

The classifier uses, as a teacher, labeled data acquired through use of, for example, a reagent that stains live cells or dead cells and assigned information on whether or not the region is a live cell region. Further, the classifier is generated by training a machine learning model that uses, as input, at least any one of at least a part of the cell image including the targeted cell region and the image feature amount calculated from at least a part of the cell image including the targeted cell region, and uses, as output, a true or false value indicating whether or not the region is a live cell region.

When at least a part of the cell image including the targeted cell region is used as input, a deep learning model such as a deep neural network (DNN), a convolutional neural network (CNN), or a generative adversarial network (GAN) is suitable as the machine learning model.

When the image feature amount calculated from at least a part of the cell image including the targeted cell region is used as input, for example, the following can be used. That is, it is possible to use a diameter, an average luminance value, a minimum luminance value, a luminance deviation, and also a feature amount (such as circularity) indicating a contour shape of the cell region and a feature amount (such as homogeneity by GLCM) indicating a texture.

Examples of the machine learning model to be used include a method such as XGBoost, but the present invention is not limited thereto, and it is also possible to employ a model such as a neural network, a support vector machine (SVM), a random forest, LightGBM, or a Gaussian mixture model.

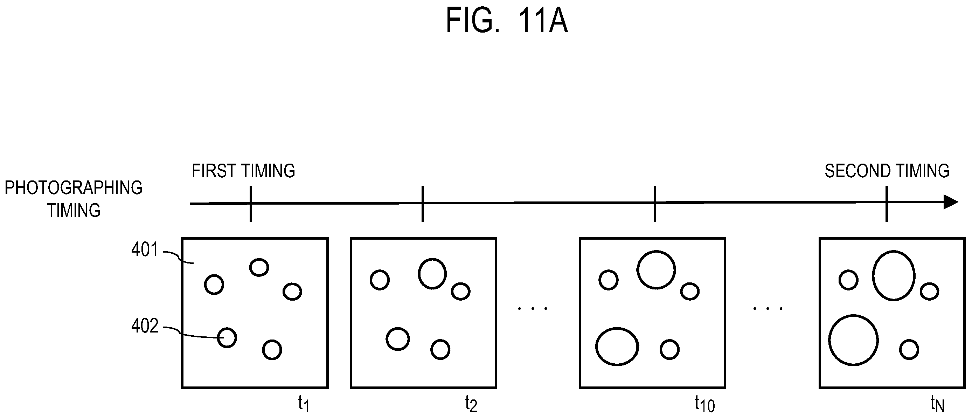

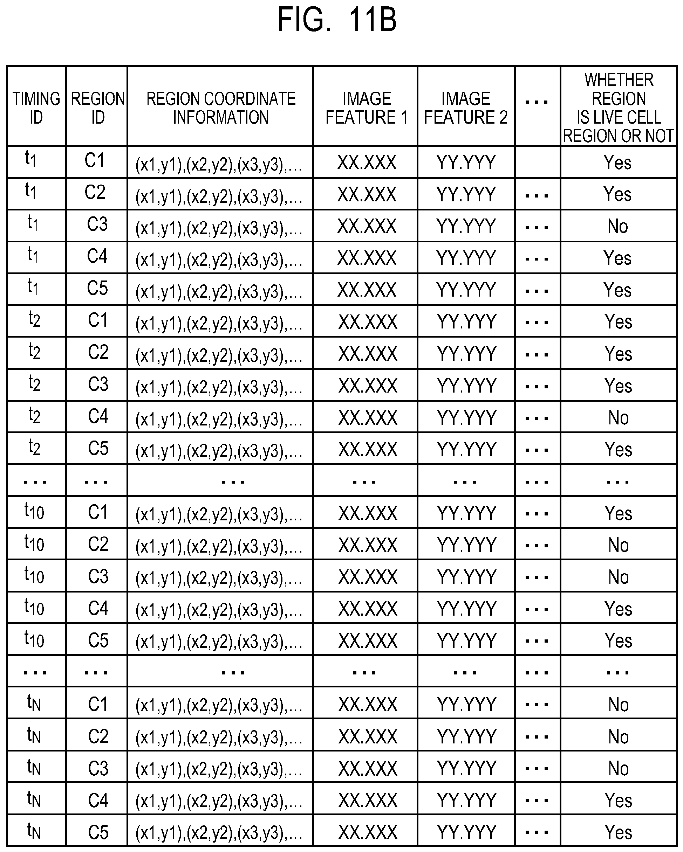

An example of using the classifier based on image feature amounts of the cell region is illustrated in FIG. 11A. In the live cell region determination step of Step S102, image feature amounts to be used as input to the trained classifier are calculated for each cell region 402. The classifier uses those image feature amounts as input to determine whether or not the region is a live cell region, and outputs such information including image features and information indicating whether or not the region is a live cell region as shown in FIG. 11B.

In this modification example, the information acquisition method of acquiring information about the cell viability without performing a cell staining process and the information acquisition system therefor are provided, but Modification Example 2 and Modification Example 3 may be combined to perform the cell staining process and then perform the determination of whether or not the region is a live cell region using the classifier.

### (Modification Example 4: Tracking Step performed when Fusion or Separation of Cell Regions occurs)

When a plurality of cells are gathered to exhibit an aggregated state such as a colony, there is a case in which cell regions are fused or separated. Meanwhile, when cells exhibit a single cell state in which individual cells are separated from each other, there is a case in which each cell has been separated into a plurality of cell regions due to cell division. In this modification example, in the tracking step of Step S103, the live cell regions in which fusion or separation has occurred between the first timing and the second timing are associated with each other as being of the same lineage (as being derived from the same cell region), to thereby enable the information about the cell viability to be acquired more accurately. As the determination of whether or not cells are derived from the same cell region, the cells may be determined to be derived from the same cell region when, for example, the overlapping amount calculated by Expression (1) is larger than 0, that is, when there is an overlap between the cell regions (live cell regions) in two consecutive cell images. The overlapping amount may have a lower limit value set to any numerical value depending on the cell type or the like. In another case, the determination of whether or not cells are derived from the same cell region may be performed by the labeling processing for the three-dimensional volume data described above.

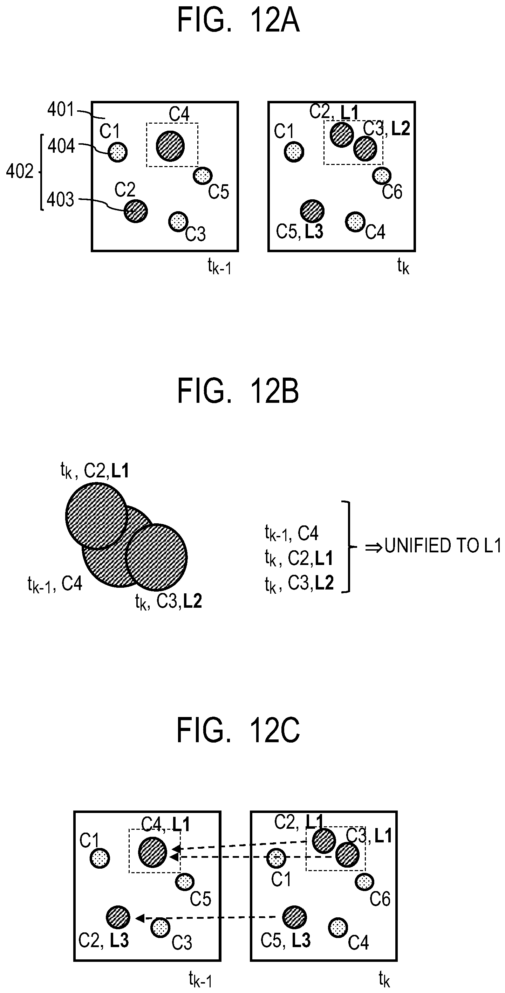

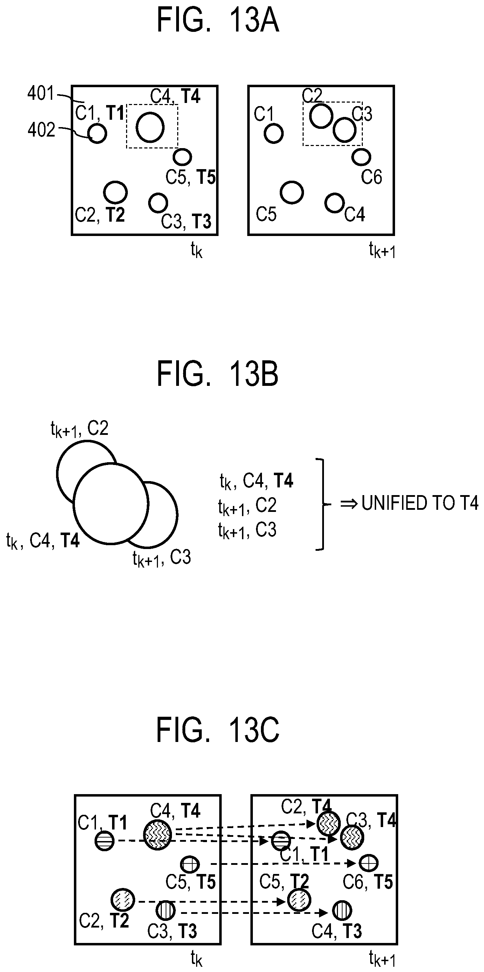

An example of the method of associating the live cell regions with each other in the tracking step in this modification example is described with reference to FIG. 12A to FIG. 12F and FIG. 13A to FIG. 13F.

In FIG. 12A to FIG. 12F, in the same manner as in FIG. 7A, a method in which the association of only live cell regions is performed while tracing back in order of t_{N-1} → t_{N-2} → ... starting from the live cell region present in the cell image having the timing ID of t_{N} which is the cell image photographed at the second timing is illustrated. In this case, the association of a live cell region present in the cell image having the timing ID of tₖ with a live cell region present in the cell image photographed at the later photographing timing having the timing ID of tₖ₊₁ has been completed. Then, the step of associating a live cell region present in the cell image having the timing ID of tₖ with a live cell region present in the cell image having the timing ID of tₖ₋₁ is illustrated.

FIG. 12A to FIG. 12C are illustrations of a case in which the separation of a live cell region occurred between the timings at which two cell images, one having the timing ID of tₖ₋₁ and the other having the timing ID of tₖ, were photographed. In the cell image having the timing ID of tₖ, live cell tracking IDs of L1, L2, and L3 have already been assigned to live cell regions (which may be hereinafter expressed as "(timing ID, region ID)") having region IDs of C2, C3, and C5, respectively.

Here, with attention being given to the live cell regions having the region IDs of C2 and C3 present in the cell image having the timing ID of tₖ, comparison to the cell image having the timing ID of tₖ₋₁ is performed. FIG. 12B is a diagram in which live cell regions (tₖ, C2) and (tₖ, C3) having the region IDs of C2 and C3 present in the cell image having the timing ID of tₖ are superimposed on a live cell region (tₖ₋₁, C4) having the region ID of C4 present in the cell image having the timing ID of tₖ₋₁. It can be understood that both the live cell regions (tₖ, C2) and (tₖ, C3) overlap with the live cell region (tₖ₋₁, C4). That is, the overlapping amount between the live cell region (tₖ, C2) and the live cell region (tₖ₋₁, C4) which is calculated by Expression (1) is larger than 0. The overlapping amount between the live cell region (tₖ, C3) and the live cell region (tₖ₋₁, C4) is also larger than 0. In such a case, as illustrated in FIG. 12C, the three live cell regions with (timing ID, region ID) being (tₖ, C2), (tₖ, C3), and (tₖ₋₁, C4) are regarded as being of the same lineage (as being derived from the same cell region), and are assigned the same live cell tracking ID of L1. The live cell regions with (timing ID, region ID) of (tₖ, C2) and (tₖ, C3) are originally assigned different live cell tracking IDs (L1 and L2, respectively), and thus are updated so that L1 is assigned to both. In addition, the live cell regions to which the live cell tracking ID of L2 is assigned at the timing IDs of from tₖ₊₁ to t_{N} each have the live cell tracking ID updated to L1. In this modification example, the live cell tracking ID of the cell regions derived from the same cell region are unified to L1, which is the live cell tracking ID of (tₖ, C2), but may be unified to L2, which is the live cell tracking ID assigned to the live cell region (tₖ, C3). In another case, a new ID that is not used as the live cell tracking ID of any other live cell region may be generated to be used to unify the live cell tracking ID.

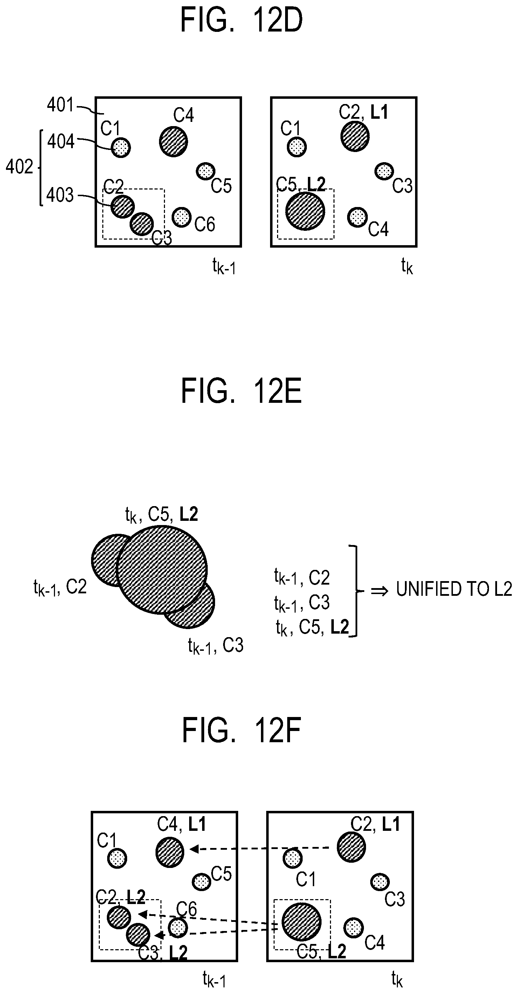

FIG. 12D to FIG. 12F are illustrations of a case in which the fusion of a live cell region occurred between the photographing timings at which two cell images, one having the timing ID of tₖ₋₁ and the other having the timing ID of tₖ, were photographed. In the cell image having the timing ID of tₖ, live cell tracking IDs of L1 and L2 have already been assigned to live cell regions having region IDs of C2 and C5, respectively. That is, the live cell region present in the cell image having the timing ID of tₖ has already been associated with the live cell region present in the cell image photographed at the later photographing timing (having the timing ID of tₖ₊₁).

Here, with attention being given to the live cell region having the region ID of C5 present in the cell image having the timing ID of tₖ, comparison to the cell image having the timing ID of tₖ₋₁ is performed. FIG. 12E is a diagram in which a live cell region (tₖ, C5) having the region ID of C5 present in the cell image having the timing ID of tₖ is superimposed on live cell regions (tₖ₋₁, C2) and (tₖ₋₁, C3) having the region IDs of C2 and C3 present in the cell image having the timing ID of tₖ₋₁. As specifically illustrated in FIG. 12E, it can be understood that the live cell region (tₖ, C5) overlaps with the two live cell regions (tₖ₋₁, C2) and (tₖ₋₁, C3). That is, the overlapping amount between the live cell region (tₖ, C5) and the live cell region (tₖ₋₁, C2) which is calculated by Expression (1) is larger than 0. The overlapping amount between the live cell region (tₖ, C5) and the live cell region (tₖ₋₁, C3) is also larger than 0. In such a case, as illustrated in FIG. 12F, the three live cell regions with (timing ID, region ID) being (tₖ, C5), (tₖ₋₁, C2), and (tₖ₋₁, C3) are regarded as being of the same lineage (as being derived from the same cell region), and are assigned the same live cell tracking ID of L2.

When there is a region that is not a live cell region in pre-fusion or post-separation cell regions, it is not required to perform the above-mentioned association method.

In FIG. 13A to FIG. 13F, in the same manner as the method illustrated in FIG. 8A, a method in which, for all cell regions included in each cell image, the association of cell regions of the same lineage (derived from the same cell region) with each other is first carried out between cell images at two consecutive photographing timings is illustrated. After the association of cell regions derived from the same cell region which are present in the plurality of cell images with each other is performed, the association of live cell regions derived from the same cell region which are present in the plurality of cell images is performed while tracing back in time to the first timing starting from a live cell region present in the cell image photographed at the second timing.

In this case, the association of a cell region present in the cell image having the timing ID of tₖ with a cell region present in the cell image photographed at the previous photographing timing (having the timing ID of tₖ₊₁) has been completed. Then, the step of associating a cell region present in the cell image having the timing ID of tₖ with a cell region present in the cell image having the timing ID of tₖ₊₁ is illustrated.

FIG. 13A to FIG. 13C are illustrations of a case in which the separation of a cell region occurred between the timings at which two cell images, one having the timing ID of tₖ and the other having the timing ID of tₖ₊₁, were photographed. In the cell image at tₖ, the cell tracking IDs of from T1 to T5 are assigned to cell regions having the region IDs of from C1 to C5, respectively, and the association of cell regions derived from the same cell region with each other has already been performed in relation to the cell regions in the cell image at tₖ₋₁ photographed at the previous photographing timing.

Here, with attention being given to the cell region (tₖ, C4) having the region ID of C4 present in the cell image having the timing ID of tₖ, comparison to the cell image having the timing ID of tₖ₊₁ is performed. FIG. 13B is a diagram in which the cell region (tₖ, C4) is superimposed on cell regions ((tₖ₊₁, C2) and (tₖ₊₁, C3)) having the region IDs of C2 and C3 present in the cell image having the timing ID of tₖ₊₁. It can be understood that both of the cell regions (tₖ₊₁, C2) and (tₖ₊₁, C3) overlap with the cell region (tₖ, C4).

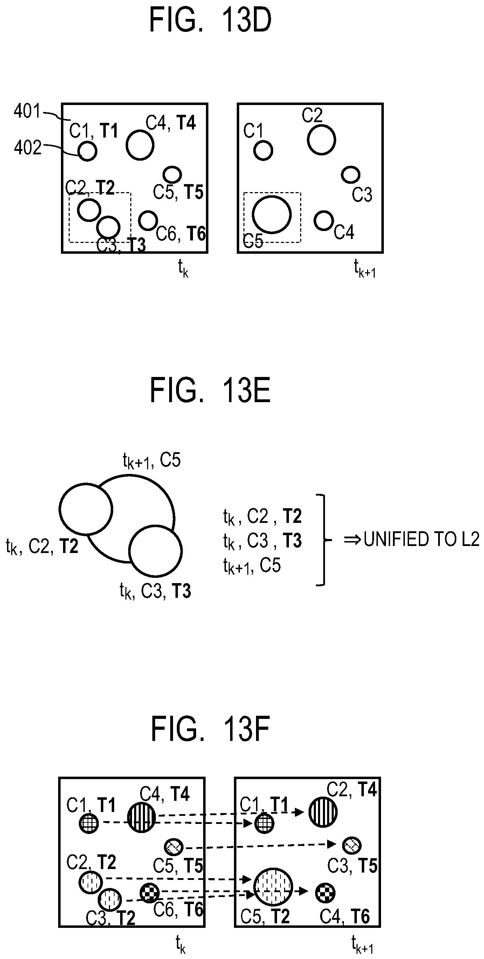

Meanwhile, FIG. 13D to FIG. 13F are illustrations of a case in which the fusion of a cell region occurred between the photographing timings at which two cell images, one having the timing ID of tₖ and the other having the timing ID of tₖ₊₁, were photographed. In the cell image at tₖ, the cell tracking IDs of from T1 to T6 are assigned to cell regions having the region IDs of from C1 to C6, respectively, and the association of cell regions derived from the same cell region with each other has already been performed in relation to the cell regions in the cell image at tₖ₋₁ photographed at the previous photographing timing.

Here, with attention being given to the cell regions ((tₖ, C2) and (tₖ, C3)) having the region IDs of C2 and C3 present in the cell image having the timing ID of tₖ, comparison to the cell image having the timing ID of tₖ₊₁ is performed. FIG. 13E is a diagram in which the cell regions (tₖ, C2) and (tₖ, C3) are superimposed on a cell region (tₖ₊₁, C5) having the region ID of C5 present in the cell image having the timing ID of tₖ₊₁. It can be understood that the cell region (tₖ₊₁, C5) overlaps with the cell regions (tₖ, C2) and (tₖ, C3).

As illustrated in FIG. 13B and FIG. 13E, when the overlapping amount of cell regions between the cell images at two consecutive photographing timings is larger than 0, the cell regions are regarded as being of the same lineage (as being derived from the same cell region), and are associated with each other so as to have the same cell tracking ID. That is, the same cell tracking ID of T4 is assigned to the cell regions (tₖ, C4), (tₖ₊₁, C2), and (tₖ₊₁, C3) in FIG. 13B. Then, the same cell tracking ID of T2 is assigned to the cell regions (tₖ, C2), (tₖ, C3), and (tₖ₊₁, C5) in FIG. 13E. When the cell regions ((tₖ, C2) and (tₖ, C3)) having different cell tracking IDs are determined to be of the same lineage as in FIG. 13E, the cell tracking ID that has already been assigned is updated. The cell tracking ID to be assigned or updated in the examples of FIG. 13D to FIG. 13F may be T3 or a new unused cell tracking ID. In FIG. 13C and FIG. 13F, for ease of understanding, cell regions which have the same cell tracking ID and which are derived from the same cell region are filled with the same pattern. The method of associating the cell regions derived from the same cell region which are present in a plurality of cell images with each other may be performed by replacing the "live cell region" in the overlapping amount calculation using Expression (1) given above by the "cell region." In another case, the association of cell regions derived from the same cell region with each other may be performed by the labeling processing for the three-dimensional volume data described above.

The above-mentioned method is used to perform the association of cell regions derived from the same cell region with each other. In this modification example, the case in which the association for the same lineage is carried out for all the cell regions in chronological order of t₂ → t₃ → ... from the first timing t₁ has been described, but the order of the association is not limited thereto.

Finally, in the same manner as the above-mentioned method illustrated in FIG. 8A, each unique live cell tracking ID is assigned to live cell regions having the same cell tracking ID as that of each live cell region at the second timing while tracing back in time in order, to thereby associate the live cell regions with each other. Thus, the association of live cell regions derived from the same cell region is performed.

### (Modification Example 5: Displaying Viability Determination Results together with Image Data)

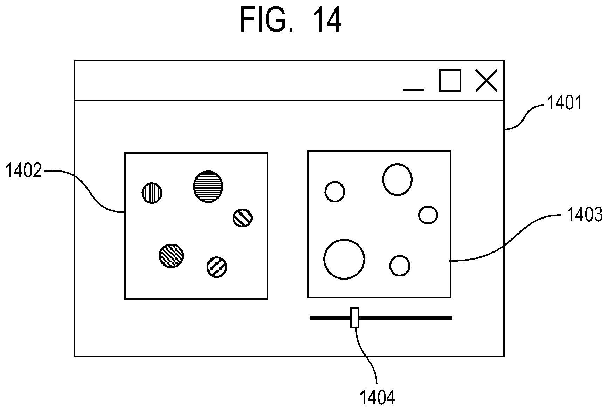

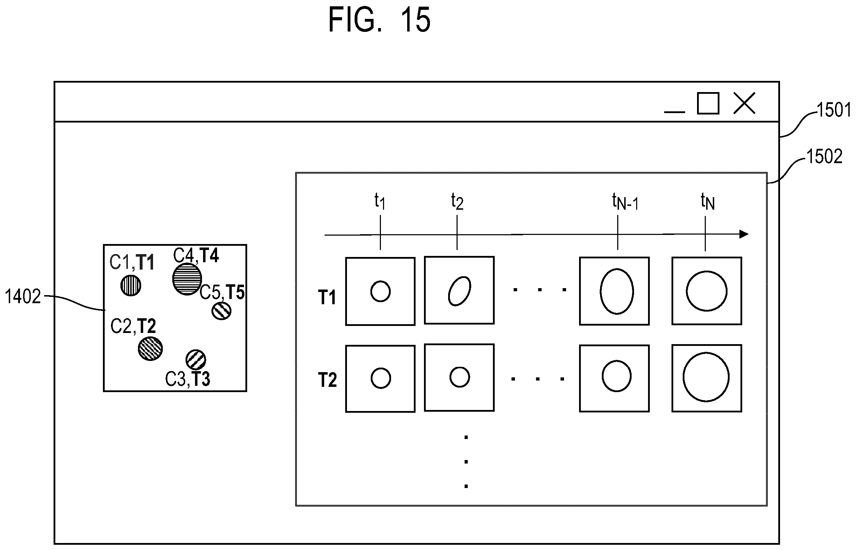

It is also suitable to present the determination results acquired in the viability determination step to the user together with image data for observing progress of cells. Specific examples of a display method therefor are described below with reference to FIG. 14 and FIG. 15.

FIG. 14 is a view for illustrating an example of a UI screen on which a superimposition image of viability determination results and a moving image generated based on the cell images obtained from the first photographing timing t₁ to the second photographing timing t_{N} are displayed side by side. A UI screen 1401 is formed of an image display screen 1402 for displaying the superimposition image of the viability determination results, a moving image display screen 1403 for displaying the moving image generated based on the cell images obtained from the first photographing timing t₁ to the second photographing timing t_{N}, and a UI 1404 for the user to control which frame of the moving image is to be displayed. The superimposition image of the viability determination results is only required to be an image processed so as to enable distinction of whether or not each cell region present in the cell image at the first photographing timing t₁ exhibits viability. For example, an image in which the cell region determined to exhibit viability and the cell region determined to exhibit no viability are filled with different colors is generated. The present invention is not limited thereto, and an image in which lines indicating contours of the cell regions are drawn on the cell image in different colors or different thicknesses for viable cells and non-viable cells may be generated. The moving image on the moving image display screen 1403 is a moving image including, as frames thereof, the cell images obtained from the first photographing timing t₁ to the second photographing timing t_{N}. In this case, the information acquired in the live cell region determination step or the tracking step may be displayed by being superimposed on each frame image of the moving image. For example, the moving image is obtained after processing the cell images at the respective photographing timings so as to enable distinction of whether or not each cell region is a live cell region. Specifically, in the same manner as in the above-mentioned method, the processing may be performed by a method of filling the cell regions including live cells and the cell regions that do not include live cells with different colors, or by a method of drawing contour lines indicating those cell regions in different colors or different thicknesses.

FIG. 15 is a view for illustrating an example in which, as image data for observing the progress of cells, cropped images of respective cell regions at respective photographing timings are created, and are displayed by being arrayed based on the photographing timing and the (live) cell tracking ID of the cell region. A UI screen 1501 is formed of the image display screen 1402 for displaying the superimposition image of the viability determination results and an image display screen 1502 for displaying the cropped images of the respective cell regions at the respective photographing timings. The image to be displayed on the image display screen 1402 is the same as that of FIG. 14. On the image display screen 1502, the cropped images of the respective cell regions at the respective photographing timings are grouped by the (live) cell tracking ID, and are displayed by being arrayed in order of the photographing timing. In this case, the cropped image is an image cropped to a size smaller than the photographed cell image so that a relevant cell region is located at the center.

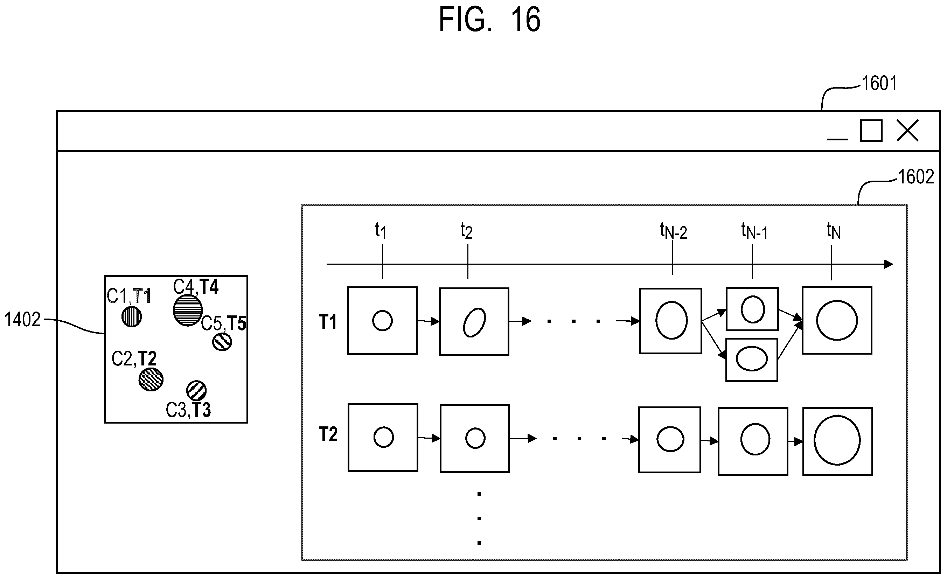

As described in Modification Example 4, there is a case in which cells grow with fusion and separation, thereby causing a plurality of cell regions to which the same (live) cell tracking ID is assigned at the same photographing timing. In such a case, each cropped image may be created so as to include all cell regions having the same (live) cell tracking ID in a cell image at the same photographing timing to be displayed. In another case, a correspondence relationship of cell regions subjected to fusion and separation between two consecutive photographing timings may be displayed in a tree diagram format. FIG. 16 is a view for illustrating an example of displaying the cropped images in a tree diagram format. On an image display screen 1602 within a UI screen 1601, the cropped images of the respective cell regions at the respective photographing timings are grouped by the tracking ID and displayed by being arrayed in order of the photographing timing in the same manner as in FIG. 15, but the cropped images of cell regions involving fusion or separation are displayed by being connected by lines so as to allow the user to distinguish which cell regions corresponded to each other at two consecutive photographing timings.

In FIG. 15 and FIG. 16, the examples in which the cropped images corresponding to the respective tracking IDs are arrayed are illustrated, but a configuration in which the cropped image to be displayed may be switched in response to a user operation may be employed. For example, the user may select a cell region present in the superimposition image of the viability determination results, and only the cropped images of the cell regions corresponding to the tracking ID assigned to the selected cell region may be displayed. In addition, a UI for narrowing down the photographing timings to be displayed may be further provided, and the photographing timings of the cropped images to be displayed may be narrowed down in response to a user's operation.

As described above, according to this modification example, the user can observe the progress of each cell region in association with the viability determination results at the first photographing timing.

The display method is not limited to the examples of FIG. 14 and FIG. 15, and may be a combination of the respective display methods or may be switched in response to a user operation. For example, a UI screen formed of the image display screen 1402 for displaying the image on which the viability determination results are superimposed and the moving image display screen 1403 which are illustrated in FIG. 14 and the image display screen 1502 for displaying the cropped images which is illustrated in FIG. 15 may be employed.

### <Second Embodiment>

A program according to a second embodiment is an information acquisition program for causing a computer to execute the information acquisition method which has been described above.

### <Third Embodiment>

A recording medium according to a third embodiment is a recording medium (which may be a non-transitory recording medium) having stored thereon the above-mentioned information acquisition program in a computer-readable format.

### <Example>

Now, Example of acquiring information about the cell viability by the information acquisition method described in the present specification is described.

As target cells, iPS cells were used, and cell suspensions that had been subjected to a freeze-thaw treatment in advance were used as cell samples. Three cooling rates during freezing of -0.5°C/min, -1°C/min, and -2°C/min were used, and three temperatures and times during thawing of 4°C and 25 minutes, 25°C and 6 minutes, and 37°C and 80 seconds were used. Through combination of those, cell samples exhibiting high viability and cell samples exhibiting low viability were prepared.

The suspensions of iPS cells obtained in the above-mentioned manner were seeded and cultured in a 6-well plate at 13,000 cells/well in accordance with the established hiPS PBMC protocol published by Kyoto University on 15 Feb 2019 (see https://www.cira.kyoto-u.ac.jp/j/research/img/protocol/hiPS_PBMC_protocol.pdf?1732087689398), and images of cells over time during culture were automatically acquired through use of an Incucyte S3 (Sartorius). The photographing conditions were 4-times magnification, 9 fields of view, phase difference observation, and a schedule of once per hour. The photographing was performed until 24 hours later with the first time of photographing being set to 0 hours.

The live cell region determination step was performed on the acquired images over time through use of a self-made pre-trained classifier, followed by the tracking step and the viability determination step, and a viable cell rate ((number of live cell regions determined to exhibit viability)÷(total number of cell regions)) and a number of viable cells (number of live cell regions determined to exhibit viability) were measured in the entire photographing field of view at the time of photographing at the photographing timing of 0 hours.

As a result, the viable cell rate and the number of viable cells changed depending on freezing and thawing conditions with the viable cell rate ranging from 20% to 46% and the number of viable cells ranging from 398 to 1,017.

### <Reference Example>

As Reference Example, the same cell samples as those in Example were used to measure a live cell rate immediately after cell thawing through use of a commercially available cell counter, and were seeded and cultured in accordance with the established protocol (https://www.cira.kyoto-u.ac.jp/j/research/img/protocol/hiPS_PBMC_protocol.pdf?1732087689398) to measure a confluency on the fourth day of culture.

The measurement of the live cell rate using the cell counter was performed by a method of using trypan blue (TB) for staining and Countess 3 (Thermo Fisher) for measurement and a method of using acridine orange (AO) for staining and NucleoCounter NC-200 (ChemoMetec) for measurement. The confluency on the fourth day of culture was measured by seeding and culturing the cells in a 6-well plate at 13,000 cells/well and then acquiring and analyzing images after culture through use of an Incucyte S3 (Sartorius).

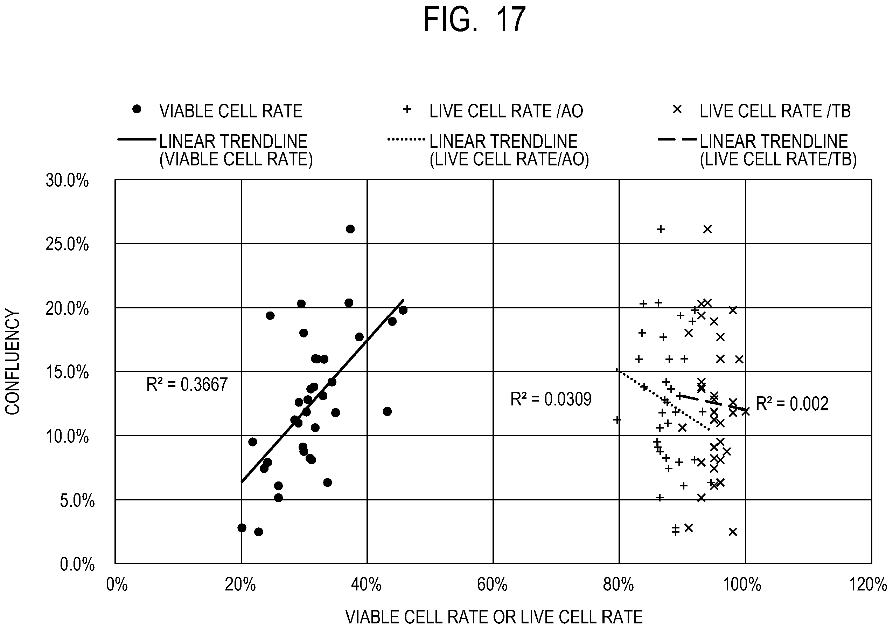

FIG. 17 is a graph for showing a correlation between the viable cell rate in Example and the confluency on the fourth day of culture in Reference Example and a correlation between the live cell rate in Reference Example and the confluency on the fourth day of culture in Reference Example. The viable cell rate in Example correlated with the confluency that is an amount of cells actually obtained by culture (at a correlation coefficient of 0.61). Meanwhile, the live cell rate in Reference Example correlated weakly with the confluency (all were weak negative correlations). From the above, it was found that the viable cell rate in this Example serves as an index that reflects survivability of cells compared to a live cell rate currently used as standard.

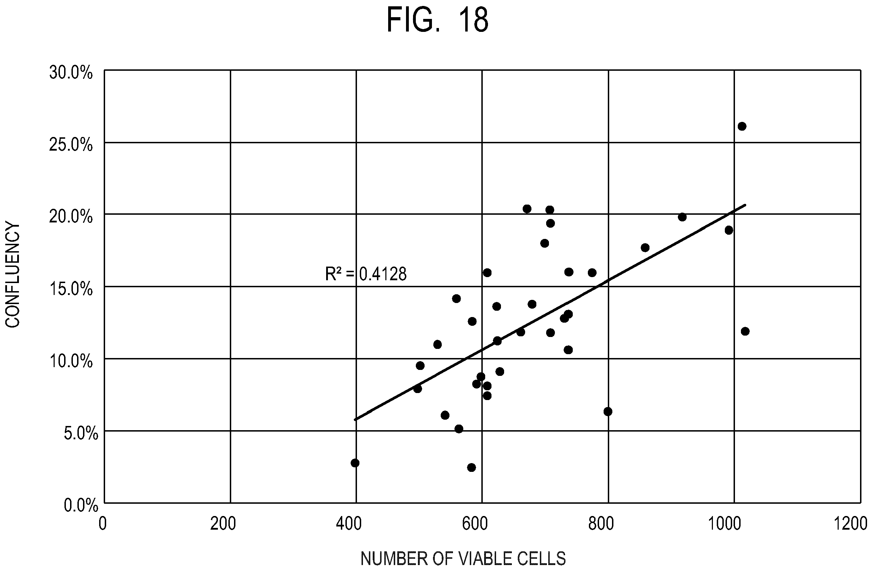

FIG. 18 is a graph for showing a correlation between the number of viable cells in Example and the confluency on the fourth day of culture in Reference Example. The correlation coefficient was 0.64, slightly improving from the viable cell rate in FIG. 17. It is difficult to strictly keep an amount of cell seeding constant, and hence it is considered that the absolute number of viable cells had a higher correlation with the confluency than the viable cell rate. Depending on the application, it is also suitable to use the number of viable cells as an index.

According to the disclosure of the present specification, the information about the cell viability can be obtained based on the tracking information on respective cells in the cell images photographed over time and the live cell region determination results. Accordingly, it is possible to provide more useful information to a person who uses cells particularly in quality inspection of a large lot of cells such as a cell stock.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information acquisition method of acquiring information about cell viability, the information acquisition method comprising:
an image acquisition step of acquiring a plurality of cell images photographed at a plurality of different photographing timings including a first timing and a second timing;
a live cell region determination step of determining whether a cell region present in each of the plurality of cell images is a live cell region including a live cell;
a tracking step of tracking live cell regions derived from the same cell region by performing association of live cell regions derived from the same cell region which are respectively present in the plurality of cell images photographed at the plurality of different photographing timings with each other while tracing back in time to the first timing starting from a live cell region present in one of the plurality of cell images photographed at the second timing; and
a viability determination step of determining that a live cell region successfully tracked in the tracking step among cell regions present in one of the plurality of cell images photographed at the first timing exhibits viability.

2. The information acquisition method according to claim 1, further comprising a viability quantification calculation step of calculating at least any one of the number and proportion of live cell regions determined to exhibit viability in the viability determination step out of the cell regions present in the one of the plurality of cell images photographed at the first timing.

3. The information acquisition method according to claim 1 or 2,
wherein, in the image acquisition step, the plurality of cell images comprise cell images obtained by photographing cells subjected to a staining process through use of a reagent that stains at least any one of live cells and dead cells, and
wherein the live cell region determination step includes determining whether the cell region is a live cell region based on a difference in degree of staining the cell region by the reagent.

4. The information acquisition method according to any one of claims 1 to 3, wherein the live cell region determination step includes performing determination through use of a classifier that has been trained so as to use, as input, at least any one of at least a part of each of the plurality of cell images including a targeted cell region and an image feature amount calculated from at least a part of each of the plurality of cell images including the targeted cell region and to use, as output, a result of determining whether the targeted cell region is a live cell region.

5. The information acquisition method according to any one of claims 1 to 4, wherein the tracking step includes regarding live cell regions in which one of fusion and separation has occurred between the first timing and the second timing as being derived from the same cell region and associating the live cell regions with each other.

6. An information acquisition program for causing a computer to execute the information acquisition method of any one of claims 1 to 5.

7. A recording medium having stored thereon the information acquisition program of claim 6 in a computer-readable format.

8. An information acquisition system for acquiring information about cell viability, the information acquisition system comprising:
an image acquisition module configured to acquire a plurality of cell images photographed at a plurality of different photographing timings including a first timing and a second timing;
a live cell region determination module configured to determine whether a cell region present in each of the plurality of cell images is a live cell region including a live cell;
a tracking module configured to track live cell regions derived from the same cell region by performing association of live cell regions derived from the same cell region which are respectively present in the plurality of cell images photographed at the plurality of different photographing timings with each other while tracing back in time to the first timing starting from a live cell region present in one of the plurality of cell images photographed at the second timing; and
a viability determination module configured to determine that a live cell region successfully tracked by the tracking module among cell regions present in one of the plurality of cell images photographed at the first timing exhibits viability.

## Patentansprüche

1. Informationserfassungsverfahren zum Erfassen von Informationen über Zellviabilität, wobei das Informationserfassungsverfahren umfasst:
einen Bilderfassungsschritt zum Erfassen mehrerer Zellbilder, die zu mehreren unterschiedlichen Fotografierzeiten einschließlich einer ersten Zeit und einer zweiten Zeit fotografiert wurden;
einen Bestimmungsschritt für einen Bereich lebender Zellen zum Bestimmen, ob ein Zellbereich, der in einem jeweiligen der mehreren Zellbilder vorhanden ist, ein Bereich lebender Zellen ist, der eine lebende Zelle enthält;
einen Verfolgungsschritt zum Verfolgen von von demselben Zellbereich abgeleiteten Bereichen lebender Zellen durch Durchführen einer Zuordnung von von demselben Zellbereich abgeleiteten Bereichen lebender Zellen, die jeweils in den zu den mehreren unterschiedlichen Fotografierzeiten fotografierten mehreren Zellbildern vorhanden sind, zueinander, während in der Zeit zurückgegangen wird zum ersten Zeitpunkt, beginnend von einem Bereich lebender Zellen, der in einem der mehreren zur zweiten Zeit fotografierten Zellbilder vorhanden ist; und
einen Viabilitätsbestimmungsschritt zum Bestimmen, dass ein im Verfolgungsschritt erfolgreich verfolgter Bereich lebender Zellen von Zellbereichen, die in einem der mehreren zum ersten Zeitpunkt fotografierten Zellbilder vorhanden sind, Viabilität zeigt.

2. Informationserfassungsverfahren nach Anspruch 1, ferner umfassend einen Viabilitätsquantifizierungsberechnungsschritt zum Berechnen der Anzahl und/oder des Anteils von Bereichen lebender Zellen, von denen im Viabilitätsbestimmungsschritt bestimmt wurde, dass sie Viabilität zeigen, von den Zellbereichen, die in dem einen der mehreren zum ersten Zeitpunkt fotografierten Zellbilder vorhanden sind.

3. Informationserfassungsverfahren nach Anspruch 1 oder 2,
wobei im Bilderfassungsschritt die mehreren Zellbilder Zellbilder umfassen, die durch Fotografieren von Zellen erhalten wurden, die einem Färbeprozess unter Verwendung eines Reagens unterzogen wurden, das lebende Zellen und/oder tote Zellen färbt, und
wobei der Bestimmungsschritt für einen Bereich lebender Zellen umfasst: Bestimmen, ob der Zellbereich ein Bereich lebender Zellen ist, basierend auf einem Unterschied im Grad der Färbung des Zellbereichs durch das Reagens.

4. Informationserfassungsverfahren nach einem der Ansprüche 1 bis 3, wobei der Bestimmungsschritt für einen Bereich lebender Zellen umfasst: Durchführen einer Bestimmung unter Verwendung eines Klassifizierers, der trainiert wurde, als Eingabe mindestens einen Teil von einem jeweiligen der mehreren Zellbilder einschließlich eines Zielzellbereichs und/oder eine Bildmerkmalsmenge zu verwenden, die aus mindestens einem Teil von einem jeweiligen der mehreren Zellbilder einschließlich des Zielzellbereichs berechnet wurde, und als Ausgabe ein Ergebnis der Bestimmung, ob der Zielzellbereich ein Bereich lebender Zellen ist, zu verwenden.

5. Informationserfassungsverfahren nach einem der Ansprüche 1 bis 4, wobei der Verfolgungsschritt umfasst: Betrachten von Bereichen lebender Zellen, in denen zwischen der ersten Zeit und der zweiten Zeit eine Fusion oder Trennung aufgetreten ist, als aus demselben Zellbereich abgeleitet, und Zuordnen der Bereiche lebender Zellen zueinander.

6. Informationserfassungsprogramm zum Veranlassen eines Computers, das Informationserfassungsverfahren nach einem der Ansprüche 1 bis 5 auszuführen.

7. Aufzeichnungsmedium, auf dem das Informationserfassungsprogramm nach Anspruch 6 in einem computerlesbaren Format gespeichert ist.

8. Informationserfassungssystem zum Erfassen von Informationen über Zellviabilität, wobei das Informationserfassungssystem umfasst:
ein Bilderfassungsmodul, das konfiguriert ist, mehrere Zellbilder zu erfassen, die zu mehreren unterschiedlichen Fotografierzeiten einschließlich einer ersten Zeit und einer zweiten Zeit fotografiert wurden;
ein Bestimmungsmodul für einen Bereich lebender Zellen, das konfiguriert ist, zu bestimmen, ob ein Zellbereich, der in einem jeweiligen der mehreren Zellbilder vorhanden ist, ein Bereich lebender Zellen ist, der eine lebende Zelle enthält;
ein Verfolgungsmodul, das konfiguriert ist, von demselben Zellbereich abgeleitete Bereiche lebender Zellen zu verfolgen, und zwar durch Durchführen einer Zuordnung von von demselben Zellbereich abgeleiteten Bereichen lebender Zellen, die jeweils in den zu den mehreren unterschiedlichen Fotografierzeiten fotografierten mehreren Zellbildern vorhanden sind, zueinander, während in der Zeit zurückgegangen wird zum ersten Zeitpunkt, beginnend von einem Bereich lebender Zellen, der in einem der mehreren zur zweiten Zeit fotografierten Zellbilder vorhanden ist; und
ein Viabilitätsbestimmungsmodul, das konfiguriert ist, zu bestimmen, dass ein vom Verfolgungsmodul erfolgreich verfolgter Bereich lebender Zellen von Zellbereichen, die in einem der mehreren zum ersten Zeitpunkt fotografierten Zellbilder vorhanden sind, Viabilität zeigt.

## Revendications

1. Procédé d'acquisition d'informations consistant à acquérir des informations sur la viabilité cellulaire, le procédé d'acquisition d'informations comprenant :
une étape d'acquisition d'images consistant à acquérir une pluralité d'images cellulaires photographiées à une pluralité de moments de photographie différents incluant un premier moment et un deuxième moment ;
une étape de détermination de région cellulaire vivante consistant à déterminer si une région cellulaire présente dans chacune de la pluralité d'images cellulaires est une région cellulaire vivante incluant une cellule vivante ;
une étape de suivi consistant à suivre des régions cellulaires vivantes dérivées de la même région cellulaire en réalisant une association de régions cellulaires vivantes dérivées de la même région cellulaire qui sont respectivement présentes dans la pluralité d'images cellulaires photographiées à la pluralité de moments de photographie différents les unes avec les autres tout en retraçant dans le temps le premier moment à partir d'une région cellulaire vivante présente dans l'une de la pluralité d'images cellulaires photographiées au deuxième moment ; et
une étape de détermination de viabilité consistant à déterminer qu'une région cellulaire vivante suivie avec succès dans l'étape de suivi parmi des régions cellulaires présentes dans l'une de la pluralité d'images cellulaires photographiées au premier moment présente une viabilité.

2. Procédé d'acquisition d'informations selon la revendication 1, comprenant en outre une étape de calcul de quantification de viabilité consistant à calculer au moins l'un quelconque parmi le nombre et la proportion de régions cellulaires vivantes déterminées comment présentant une viabilité dans l'étape de détermination de viabilité parmi les régions cellulaires présentes dans l'une de la pluralité d'images cellulaires photographiées au premier moment.

3. Procédé d'acquisition d'informations selon la revendication 1 ou 2,
dans lequel, dans l'étape d'acquisition d'images, la pluralité d'images cellulaires comprennent des images cellulaires obtenues par photographie de cellules soumises à un processus de coloration par l'utilisation d'un réactif qui colore au moins l'une quelconque parmi des cellules vivantes et des cellules mortes, et
dans lequel l'étape de détermination de région cellulaire vivante inclut le fait de déterminer si la région cellulaire est une région cellulaire vivante sur la base d'une différence de degré de coloration de la région cellulaire par le réactif.

4. Procédé d'acquisition d'informations selon l'une quelconque des revendications 1 à 3, dans lequel l'étape de détermination de région cellulaire vivante comporte la réalisation d'une détermination par l'utilisation d'un classificateur qui a été entraîné de manière à utiliser, comme entrée, au moins l'une quelconque parmi au moins une partie de chacune de la pluralité d'images cellulaires incluant une région cellulaire ciblée et une quantité de caractéristiques d'image calculée à partir d'au moins une partie de chacune de la pluralité d'images cellulaires incluant la région cellulaire ciblée et à utiliser, comme sortie, un résultat de la détermination du fait que la région cellulaire ciblée est une région cellulaire vivante ou non.

5. Procédé d'acquisition d'informations selon l'une quelconque des revendications 1 à 4, dans lequel l'étape de suivi inclut le fait de considérer des régions cellulaires vivantes dans lesquelles l'une d'une fusion et d'une séparation s'est produite entre le premier moment et le deuxième moment comme étant dérivées de la même région cellulaire et l'association des régions cellulaires vivantes les unes avec les autres.

6. Programme d'acquisition d'informations pour amener un ordinateur à exécuter le procédé d'acquisition d'informations selon l'une quelconque des revendications 1 à 5.

7. Support d'enregistrement sur lequel est stocké le programme d'acquisition d'informations selon la revendication 6 dans un format lisible par ordinateur.

8. Système d'acquisition d'informations pour acquérir des informations sur la viabilité cellulaire, le système d'acquisition d'informations comprenant :
un module d'acquisition d'images configuré pour acquérir une pluralité d'images cellulaires photographiées à une pluralité de moments de photographie différents incluant un premier moment et un deuxième moment ;
un module de détermination de région cellulaire vivante configuré pour déterminer si une région cellulaire présente dans chacune de la pluralité d'images cellulaires est une région cellulaire vivante incluant une cellule vivante ;
un module de suivi configuré pour suivre des régions cellulaires vivantes dérivées de la même région cellulaire en réalisant une association de régions cellulaires vivantes dérivées de la même région cellulaire qui sont respectivement présentes dans la pluralité d'images cellulaires photographiées à la pluralité de moments de photographie différents les unes avec les autres tout en retraçant dans le temps le premier moment à partir d'une région cellulaire vivante présente dans l'une de la pluralité d'images cellulaires photographiées au deuxième moment ; et
un module de détermination de viabilité configuré pour déterminer qu'une région cellulaire vivante suivie avec succès par le module de suivi parmi des régions cellulaires présentes dans l'une de la pluralité d'images cellulaires photographiées au premier moment présente une viabilité.
